# EUROPEAN PATENT APPLICATION

(11) **EP 4 786 512 A1**
(43) Date of publication of application: **05.08.2026**
(21) Application number: 26155697.1
(22) Date of filing: 02.02.2026
(51) Int. Cl.: C08G 18/00, C08K 5/34, G03G 15/02, G03G 15/08, G03G 15/16, H01B 1/24

(54) **CONDUCTIVE ELASTIC ROLLER, PROCESS CARTRIDGE, AND ELECTROPHOTOGRAPHIC IMAGE FORMING APPARATUS**

(30) Priority: 03.02.2025 JP 2025016307
(71) Applicant: Canon Kabushiki Kaisha, Tokyo, 146-8501 (JP)
(72) Inventor: TAKASHIMA, Kenji, Ohta-ku, Tokyo, 146-8501 (JP); SUZUMURA, Yoshitaka, Ohta-ku, Tokyo, 146-8501 (JP); TSURU, Seiji, Ohta-ku, Tokyo, 146-8501 (JP); GOTO, Mototeru, Ohta-ku, Tokyo, 146-8501 (JP)
(74) Representative: TBK

(57) **Abstract**

A conductive elastic roller (1) having a conductive substrate (2) and a conductive elastic layer (3) on the substrate, in which the conductive elastic layer (3) contains polyurethane and carbon nanotubes, and the polyurethane includes a nitrogen-containing heteroaromatic ring structure.

## Description

### TECHNICAL FIELD

The present disclosure relates to a conductive elastic roller, a process cartridge, and an electrophotographic image forming apparatus that are used in an electrophotographic method.

### BACKGROUND

In an electrophotographic image forming apparatus, conductive elastic rollers are used as a charging member, a transfer member, a developing member, a developer supplying member, and the like. As one aspect of the conductive elastic roller, a roller is known, which has a conductive support and a conductive layer provided on the support. This conductive elastic roller plays a role of transporting charges from the conductive support to the surface of the conductive elastic roller and imparting the charges to an abutting object by discharge or triboelectrification.

The conductive elastic rollers that are used as these members need to stably supply charges to abutting objects such as an electrophotographic photoreceptor, a developer, an intermediate transfer body, and a printing medium over a long period of time.

Japanese Patent Laid-Open No. 2004-101958 discloses a conductive member into which a carbon nanotube (CNT) is blended as a conductive agent, and in which electrical resistance is reduced by blending a small amount of the carbon nanotube, and contact with an abutting object is maintained due to low hardness and softness.

Japanese Patent Laid-Open No. 2005-220316 and Japanese Patent Laid-Open No. 2015-203806 disclose techniques of incorporating CNT and an ionic liquid into a base material resin of an electrophotographic member.

### SUMMARY

Electrophotographic image forming apparatuses are required to stably form excellent electrophotographic images even under harsh environments. According to studies by the present inventors, there has been a case where the electrical resistance value increases during the use of the conductive member according to Japanese Patent Laid-Open No. 2004-101958. In the electrophotographic members disclosed in Japanese Patent Laid-Open No. 2005-220316 and Japanese Patent Laid-Open No. 2015-203806, the electrical resistance values increased during long-term use.

The present disclosure relates to a conductive elastic roller enabling high-quality image formation over a long period of time even in the case of being applied to an electrophotographic image forming process.

In addition, the present disclosure relates to a process cartridge enabling high-quality image formation over a long period of time. Furthermore, the present disclosure relates to an electrophotographic image forming apparatus enabling high-quality image formation over a long period of time.

The present disclosure in its first aspect provides a conductive elastic roller as specified in claim 1. Optional features are specified in claim 2 to 9.

The present disclosure in its second aspect provides a process cartridge configured to be attachable to and detachable from a main body of an electrophotographic image forming apparatus as specified in claim 10.

The present disclosure in its third aspect provides an electrophotographic image forming apparatus as specified in claim 11.

According to an aspect of the present disclosure, it is possible to provide a conductive elastic roller enabling high-quality image formation over a long period of time even in the case of being applied to an electrophotographic image forming process. In addition, according to another aspect of the present disclosure, it is possible to provide a process cartridge and an electrophotographic image forming apparatus enabling high-quality image formation over a long period of time.

Features of the present disclosure will become apparent from the following description of embodiments with reference to the attached drawings. The following description of embodiments is described by way of example.

### BRIEF DESCRIPTION OF THE DRAWINGS

FIG. 1 is a schematic view illustrating one form of a conductive elastic roller.
FIG. 2 is a schematic cross-sectional view illustrating one example of an electrophotographic image forming apparatus.
FIG. 3 is a schematic cross-sectional view illustrating one example of a process cartridge.
FIGS. 4A and 4B illustrate a schematic configuration view of a jig for evaluating resistance values.

### DESCRIPTION OF THE EMBODIMENTS

In the present disclosure, unless otherwise specified, the expressions "from XX to YY" or "XX to YY" representing a numerical range refer to a numerical range that includes both the lower and upper limits. When a numerical range is stated in stages, the upper and lower limits of each numerical range can be arbitrarily combined. Furthermore, in the present disclosure, a statement such as "at least one selected from the group consisting of XX, YY, and ZZ" means any of XX, YY, ZZ, a combination of XX and YY, a combination of XX and ZZ, a combination of YY and ZZ, or a combination of XX, YY, and ZZ. When XX is a group, multiple members may be selected from XX, and the same applies to YY and ZZ.

In addition, in the present specification, a carbon nanotube is sometimes referred to as the carbon nanotube as it is and sometimes abbreviated as CNT, but no differentiation therebetween is intended.

The present inventors presume the reason for the electrical resistance value of the conductive member according to Japanese Patent Laid-Open No. 2004-101958 increasing during use as follows.

In CNTs, π-orbital electrons on one molecule are easily adsorbed to π-orbital electrons on another molecule by π-π interactions, and an aggregate is easily formed across several to several tens of thousands of CNTs. Therefore, in a case where measures for suppressing aggregation formation or breaking aggregated CNTs are not included when CNTs are mixed, large aggregates are inevitably generated.

When CNT aggregates are present in a mixed manner in a conductive member made of a resin including CNTs dispersed therein, since CNTs are highly conductive, excessive charge transfer occurs locally in the vicinities of the CNT aggregates when electricity is conducted, and a large electrostatic force due to electric field concentration is applied to CNTs. When this is repeated, the transfer in the resin or overflow onto the surface of CNTs, and the desorption of CNTs occur. Since the desorption of CNTs increases the resistance of the conductive member, it is considered that this phenomenon occurs and the electrical resistance value increases in the conductive member according to Japanese Patent Laid-Open No. 2004-101958.

In addition, the present inventors presume the reason for the electrical resistance value increasing during the long-term use of the conductive members according to Japanese Patent Laid-Open No. 2005-220316 and Japanese Patent Laid-Open No. 2015-203806 as follows.

When carbon nanotubes, which are likely to aggregate, are mixed, suppression of aggregation or a defibration of aggregates is required, and various measures for improving the dispersibility of CNTs are being taken although it is difficult to completely prevent the generation of aggregates.

In Japanese Patent Laid-Open No. 2005-220316 and Japanese Patent Laid-Open No. 2015-203806, a treatment for dispersing CNTs in the resin is performed using the affinity between the ionic liquid and CNTs. Adsorption occurs due to π-π interactions between π-orbital electrons in the nitrogen-containing heteroaromatic ring structure of a cationic component of the ionic liquid and π-orbital electrons on CNTs. When the dispersibility of CNTs in the resin is improved using this action, and the ionic liquid and CNTs in the resin are adsorbed to each other, there is a possibility that it may be possible to temporarily mitigate the transfer or desorption of CNTs.

However, when electricity is conducted, cations or anions of the ionic liquid migrate according to the applied electric field, no ionic components are present in the vicinities of all CNTs, and the effect of the affinity is also thus limited. Even in a case where the existing CNT aggregates are relatively small due to improvement in dispersibility, it is considered that long-term use (electricity conducted) causes the transfer or outflow onto the surface of CNTs attributed to electric field concentration and CNT desorption in the end, and the electrical resistance value increases.

Based on such consideration, the present inventors studied the molecular structure of polyurethane containing CNT to solve a problem of an increase in electrical resistance value over time in conductive members according to the prior art while being used by conducting electricity. As a result, it was found that a conductive elastic roller including a conductive elastic layer containing polyurethane satisfying the following requirements is capable of solving the above-described problem well.

The conductive elastic roller of the present disclosure has a conductive substrate and a conductive elastic layer on the substrate. In addition, the conductive elastic layer contains polyurethane and carbon nanotubes, and the polyurethane includes a nitrogen-containing heteroaromatic ring structure.

In the conductive elastic layer, CNTs can be adsorbed to the nitrogen-containing heteroaromatic ring structure present in the molecular skeleton of the polyurethane. Due to this adsorption, CNTs do not transfer even in a case where an electrostatic force is applied thereto when electricity is conducted.

Therefore, even after long-term use, the adsorption between the nitrogen-containing heteroaromatic ring structure and CNTs is maintained in a polyurethane resin, and the relative positions of CNTs in the polyurethane resin do not change. It is considered that an effect of suppressing the desorption of CNTs and suppressing an accompanying increase in the electrical resistance value is exhibited due to the above-described fact. Since the relative positions of CNTs in the polyurethane resin do not change, this effect is exhibited even in a case where aggregates of CNTs have been formed. In addition, this effect is also exhibited in the same manner even in a case where a voltage (electric field) higher than that of the prior art is applied.

### Conductive Elastic Roller

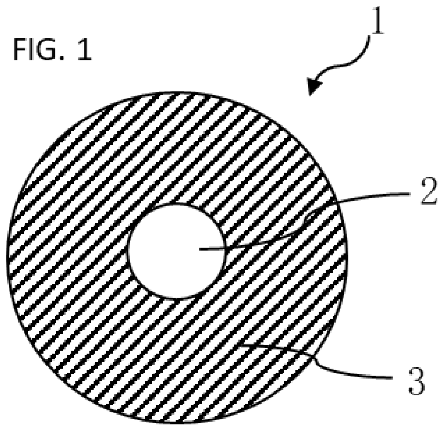

The conductive elastic roller has a conductive substrate and a conductive elastic layer on the substrate. One example of the conductive elastic roller is illustrated in FIG. 1. A conductive elastic roller 1 illustrated in FIG. 1 is made up of a conductive substrate 2 and a conductive elastic layer 3 provided on the outer periphery of the substrate.

The layer configuration of the conductive elastic roller is not limited to a configuration in which the conductive elastic layer is present on the outermost surface of the conductive elastic roller. The conductive elastic roller may further have a surface layer on the substrate and the conductive elastic layer provided on the outer periphery of the substrate. In addition, the conductive elastic roller may further have a different layer such as a different elastic layer different from the conductive elastic layer between the substrate and the conductive elastic layer.

The conductive elastic roller can be used as at least one of a charging roller, a developing roller, a toner supply roller and a transfer roller in an electrophotographic image forming apparatus.

The charging roller generates a discharge between an electrophotographic photoreceptor and itself to charge the surface of the electrophotographic photoreceptor. The developing roller controls the charges of a developer applied onto the surface thereof by triboelectrification to impart a uniform charge amount distribution, and then uniformly transfers the developer to the surface of the electrophotographic photoreceptor according to an applied electric field. The toner supply roller applies a developer onto the surface of the developing roller while controlling the charges of the developer by triboelectrification. In addition, the transfer roller transfers a developer from the electrophotographic photoreceptor to a printing medium or an intermediate transfer body and generates a discharge to stabilize the transferred developer at the same time. In particular, the conductive elastic roller is preferably a toner supply roller.

### Substrate

The substrate is conductive and functions as a support member of the conductive elastic roller and an electrode. The substrate is made of, for example, a conductive material such as a metal or an alloy such as aluminum, a copper alloy, or stainless steel; iron plated with chromium or nickel; or a conductive synthetic resin. The substrate is, for example, stainless steel. The substrate preferably has a solid cylindrical shape or a hollow cylindrical shape.

### Conductive Elastic Layer

The conductive elastic layer contains polyurethane and carbon nanotubes. In addition, the polyurethane includes a nitrogen-containing heteroaromatic ring structure.

The shape of the conductive elastic layer is not particularly limited, but the conductive elastic layer is preferably attached to cylindrically cover the outer periphery of the substrate. The nitrogen-containing heteroaromatic ring structure included in the polyurethane refers to a structure in which an element other than carbon, particularly, nitrogen configures an aromatic ring in the chemical structure.

The nitrogen-containing heteroaromatic ring structure is preferably a cationic structure formed of a nitrogen-containing heteroaromatic ring. That is, the nitrogen-containing heteroaromatic ring structure is preferably a cationic nitrogen-containing heteroaromatic ring structure. When the nitrogen-containing heteroaromatic ring structure is a cation, it becomes possible to suppress an increase in the electrical resistance value for a longer period of time.

This is due to an electrostatic force acting between the cation and an anion composed of an atom or molecule electrically oppositely charged with respect to the cation that is present in proximity. The anion in the polyurethane makes the nitrogen-containing heteroaromatic ring structure, which is a cation, further restrained in the polyurethane, and the difficulty in movement of CNTs adsorbed to the nitrogen-containing heteroaromatic ring structure thus further improves. When electricity is conducted, an electrostatic force is applied to the cation, but the nitrogen-containing heteroaromatic ring structure, which is a cation, is present in the polyurethane molecule and is thus significantly restrained by the surrounding, and the nitrogen-containing heteroaromatic ring structure does not move.

The nitrogen-containing heteroaromatic ring structure is preferably at least one cationic nitrogen-containing heteroaromatic ring structure selected from the group consisting of an imidazolium cation, a pyridinium cation, a pyrazinium cation, a pyrimidinium cation, an azepinium cation, a quinolinium cation, an isoquinolinium cation, an indolinium cation, a quinoxalinium cation, a triazolium cation, a triazinium cation, and a thiazolinium cation. The nitrogen-containing heteroaromatic ring structure is more preferably at least one cationic nitrogen-containing heteroaromatic ring structure selected from the group consisting of an imidazolium cation, a pyridinium cation, and a pyrazinium cation.

The cationic structure formed of the nitrogen-containing heteroaromatic ring more preferably has at least one cationic structure selected from the group consisting of a structure represented by the following structural formula (1), a structure represented by the following structural formula (2), and a structure represented by the following structural formula (3).

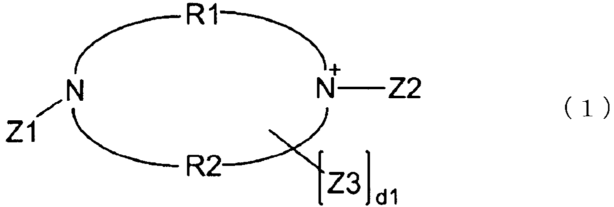

In the structural formula (1), R1 and R2 represent a hydrocarbon group necessary to form a nitrogen-containing heteroaromatic five-membered ring together with the nitrogen atom to which each bonds, and d1 represents an integer of 0 or 1. Z1 to Z3 each independently represent a structure indicated by the following structural formula (Z101), a structure indicated by the following structural formula (Z102), a structure indicated by the following structural formula (Z103), a hydrogen atom, or a hydrocarbon group having 1 to 4 (preferably 1 or 2 and more preferably 1) carbon atoms. Here, at least one of Z1 to Z3 is the structure indicated by the following structural formula (Z101), the structure indicated by the following structural formula (Z102), or the structure indicated by the following structural formula (Z103).

Z1 and Z2 are preferably the structure indicated by the following structural formula (Z101). In a case where d1 is 1, Z3 is preferably a hydrocarbon group having 1 to 4 (preferably 1 or 2 and more preferably 1) carbon atoms.

The hydrocarbon group having 1 to 4 carbon atoms is preferably an alkyl group. The nitrogen-containing heteroaromatic structure of the formula (1) is preferably, for example, an imidazolium cation.

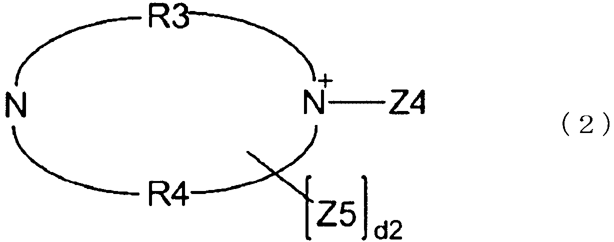

In the structural formula (2), R3 and R4 represent a hydrocarbon group necessary to form a nitrogen-containing heteroaromatic six-membered ring together with a nitrogen atom to which each bonds. d2 represents an integer of 0 to 2, and when d2 is 2, Z5 may be the same as or different from each other. Z4 and Z5 each independently represent a structure indicated by the following structural formula (Z101), a structure indicated by the following structural formula (Z102), a structure indicated by the following structural formula (Z103), a hydrogen atom, or a hydrocarbon group having 1 to 4 (preferably 1 or 2 and more preferably 1) carbon atoms. Here, at least one of Z4 and Z5 is the structure indicated by the following structural formula (Z101), the structure indicated by the following structural formula (Z102), or the structure indicated by the following structural formula (Z103).

The hydrocarbon group having 1 to 4 carbon atoms is preferably an alkyl group. The nitrogen-containing heteroaromatic structure of the formula (2) is preferably, for example, a pyrazinium cation.

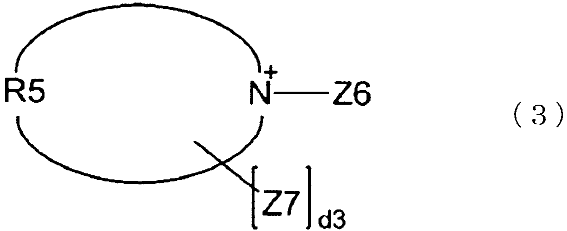

In the structural formula (3), R5 represents a hydrocarbon group necessary to form a nitrogen-containing heteroaromatic ring (preferably a five-membered ring or a six-membered ring and more preferably a six-membered ring) together with a nitrogen atom to which R5 bonds, and d3 represents an integer of 0 or 1. Z6 and Z7 each independently represent a structure indicated by the following structural formula (Z101), a structure indicated by the following structural formula (Z102), a structure indicated by the following structural formula (Z103), a hydrogen atom, or a hydrocarbon group having 1 to 4 (preferably 1 or 2 and more preferably 1) carbon atoms. Here, at least one of Z6 and Z7 is the structure indicated by the following structural formula (Z101), the structure indicated by the following structural formula (Z102), or the structure indicated by the following structural formula (Z103).

The hydrocarbon group having 1 to 4 carbon atoms is preferably an alkyl group. The nitrogen-containing heteroaromatic structure of the formula (3) is preferably, for example, a pyridinium cation.

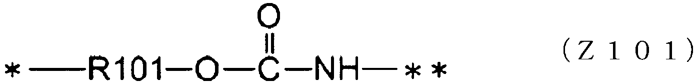

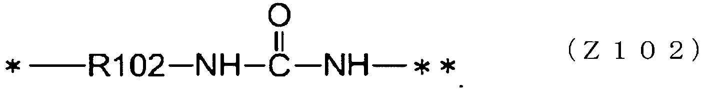

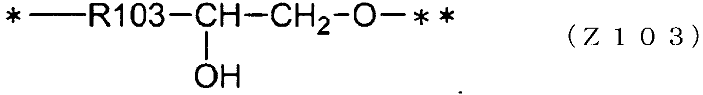

In the structural formulae (Z101), (Z102), and (Z103), R101, R102, and R103 each independently represent a divalent linear or branched hydrocarbon group, a symbol "*" represents a bonding portion with the nitrogen atom or a carbon atom configuring the nitrogen-containing heteroaromatic five-membered ring of the structural formula (1), a bonding portion with the nitrogen atom or a carbon atom configuring the nitrogen-containing heteroaromatic six-membered ring of the structural formula (2), or a bonding portion with the nitrogen atom or a carbon atom configuring the nitrogen-containing heteroaromatic ring of the structural formula (3), and a symbol "**" represents a bonding portion with a carbon atom in a polymer chain of the polyurethane.

The divalent hydrocarbon group is preferably a linear or branched alkylene group having 1 to 8 (preferably 1 to 4 and more preferably 1 or 2) carbon atoms.

In a case where the nitrogen-containing heteroaromatic ring structure is a cation, the polyurethane functions as an anion carrier.

The conductive elastic layer may contain a resin different from the resin having the nitrogen-containing heteroaromatic ring structure.

The conductive elastic roller having the conductive elastic layer is used as a charging roller, a developing roller, and a transfer roller, and in particular, can be suitably used as a toner supply roller. In the case of being used as a toner supply roller, the conductive elastic roller having the conductive elastic layer is preferably a foamed structure having continuous pores therein. The toner supply roller is required to have a toner supply performance. In the foamed structure, it is preferable to control characteristics such as the average cell diameter on the surface, the number of cells, the airflow rate, and the density of the whole foamed elastic layer.

The physical property values of the conductive elastic layer having the foamed structure are not particularly limited, but are preferably, for example, within the following numerical ranges. The conductive elastic layer is preferably a foamed elastic layer having voids on the surface, for which an average cell diameter is 100 to 500 µm, and the number of cells is 50 to 300 cells per square inch.

The average cell diameter on the surface of the conductive elastic layer is preferably 100 to 500 µm and more preferably 200 to 400 µm. The number of cells in the conductive elastic layer is preferably 50 to 300 cells per square inch and more preferably 70 to 200 cells per square inch. The airflow rate of the conductive elastic layer is, for example, from 0.5 L/min to 3.0 L/min. The density of the conductive elastic layer is, for example, from 0.05 g/cm³ to 0.20 g/cm³.

The average cell diameter and the number of cells can be controlled by, for example, the adjustment of conditions in the fabrication step of the conductive elastic layer or the addition of an auxiliary agent to be described below.

### Carbon Nanotubes (CNTs)

The conductive elastic layer contains carbon nanotubes (CNTs). CNT refers to a substance made of one or multiple graphene sheets composed of a six-membered ring network of carbon atoms in a coaxial tubular shape. Generally, CNTs are classified into single-layer CNTs and multilayer CNTs depending on the number of layers configuring the coaxial tubular peripheral wall, and furthermore, CNTs are classified into a zigzag type, an armchair type, and a chiral type based on a difference in the carbon atom array, which shows that various structures are known. The present disclosure can be applied to any of such CNT structures. The carbon nanotubes preferably include single-wall carbon nanotubes and are more preferably single-wall carbon nanotubes.

The number-average value of the lengths in the short-side direction of the carbon nanotubes is preferably 2.0 to 50.0 nm and more preferably 4.0 to 40.0 nm.

The number-average value of the lengths in the long-side direction of the carbon nanotubes is preferably 10 to 2000 µm and more preferably 100 to 500 µm. This is because adsorption between the nitrogen-containing heteroaromatic ring structure and CNTs is more likely to occur when the lengths in the long-side direction with respect to the short sides, that is, the aspect ratios are large.

### Polyurethane

The polyurethane that is contained in the conductive elastic layer of the conductive elastic roller includes a nitrogen-containing heteroaromatic ring structure.

The polyurethane having a nitrogen-containing heteroaromatic ring structure is, for example, a reaction product of a compound including a nitrogen-containing heteroaromatic ring structure and a polyurethane raw material mixture forming the polyurethane. The polyurethane raw material mixture contains, for example, a compound other than the compound including a nitrogen-containing heteroaromatic ring structure (hereinafter also referred to as "nitrogen-containing heteroaromatic ring compound"), preferably, a polyol and a polyisocyanate. The nitrogen-containing heteroaromatic ring compound is preferably an ionic compound including the nitrogen-containing heteroaromatic ring structure, which is a cation, and an anion.

The compound including a nitrogen-containing heteroaromatic ring structure preferably has at least one functional group containing a hydroxyl group, an amino group, or a glycidyl group. The hydroxyl group or the amino group reacts with an isocyanate group of the nitrogen-containing heteroaromatic ring compound to form a bond. Therefore, the nitrogen-containing heteroaromatic ring structure can be introduced into the urethane molecular structure from, for example, a reaction between the nitrogen-containing heteroaromatic ring compound and the polyisocyanate. The glycidyl group reacts with a hydroxyl group of the nitrogen-containing heteroaromatic ring compound to form a bond. Therefore, the nitrogen-containing heteroaromatic ring structure can be introduced into the urethane molecular structure from a reaction between the nitrogen-containing heteroaromatic ring compound and the polyol.

Examples of the compound including a nitrogen-containing heteroaromatic ring structure include the following compounds having the nitrogen-containing heteroaromatic ring structure and a hydroxyl group:

1-(2-hydroxyethyl)imidazole, 4(5)-(hydroxymethyl)imidazole, 5-hydroxy-1-methyl-1H-pyrazole, 1-(2-hydroxyethyl)pyrrole, 2-hydroxypyridine, 3-hydroxypyridine, 4-hydroxypyridine, 6-hydroxypyrimidine, 2-hydroxypyrazine, 2,4,6-trihydroxy-1,3,5-triazine, 5-hydroxyindole; and derivatives thereof.

The compound having the nitrogen-containing heteroaromatic ring structure and having at least one functional group containing an amino group or a glycidyl group is not particularly limited. Examples thereof include compounds having a structure in which the hydroxyl group of the compound having the nitrogen-containing heteroaromatic ring structure and a hydroxyl group exemplified above has been substituted with a group containing a glycidyl group or an amino group.

As already described, the nitrogen-containing heteroaromatic ring structure is preferably a cationic structure, and in this case, the compound having the nitrogen-containing heteroaromatic ring structure, which is a cation, is an ionic compound. The cationic structure is more preferably each of the structures indicated by the structural formulae (1) to (3) shown above.

Therefore, the compound including a nitrogen-containing heteroaromatic ring structure preferably a compound in which in the structure indicated by the structural formula (1), the structure indicated by the structural formula (2), or the structure indicated by the structural formula (3), a portion to which the structure indicated by the structural formula (Z101), the structure indicated by the structural formula (Z102), or the structure indicated by the structural formula (Z103) bonds has been substituted with a functional group containing a hydroxyl group, an amino group, or a glycidyl group.

The ionic compound is a precursor of at least one cationic structure selected from the group consisting of the structures indicated by the structural formulae (1) to (3) and is introduced into the polyurethane by a reaction with, for example, an isocyanate group or a hydroxyl group and capable of forming the cationic structure.

In the case of a cationic skeleton including a cationic nitrogen-containing heteroaromatic ring, positive charges present on the nitrogen atom are also distributed in other atoms on the aromatic ring around the nitrogen atom by conjugation. As a result, the range of the adsorption action to CNTs is widened.

The structure indicated by the structural formula (1) can be formed by a nitrogen-containing heteroaromatic five-membered ring cation having at least one functional group containing a hydroxyl group, an amino group, or a glycidyl group and further having two nitrogen atoms.

In a case where the structure indicated by the structural formula (1) is a nitrogen-containing heteroaromatic five-membered ring cation having at least one functional group containing a hydroxyl group, the following can be said. That is, a structure having at least one structure indicated by the structural formula (Z101) can be obtained by reacting an ionic compound containing the cation and an isocyanate group.

In a case where the structure indicated by the structural formula (1) is a nitrogen-containing heteroaromatic five-membered ring cation having at least one functional group containing an amino group, the following can be said. That is, a structure having at least one structure indicated by the structural formula (Z102) can be obtained by reacting an ionic compound containing the cation and an isocyanate group.

In a case where the structure indicated by the structural formula (1) is a nitrogen-containing heteroaromatic five-membered ring cation having at least one functional group containing a glycidyl group, the following can be said. That is, a structure having at least one structure indicated by the structural formula (Z103) can be obtained by reacting an ionic compound containing the cation and a hydroxyl group.

The nitrogen-containing heteroaromatic five-membered ring in the structural formula (1) is preferably imidazolium. Examples of such a structure include structures having an imidazoline ring indicated by the following structural formula (4). In the structural formula (4), Z1, Z2, Z3, and d1 are the same as those in the structural formula (1).

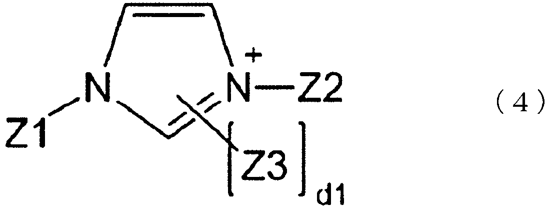

In the structural formula (4), d1 represents an integer of 0 or 1, and Z1 to Z3 each independently represent the structure indicated by the structural formula (Z101), the structure indicated by the structural formula (Z102), the structure indicated by the structural formula (Z103), a hydrogen atom, or a hydrocarbon group having 1 to 4 (preferably 1 or 2 and more preferably 1) carbon atoms. Here, at least one of Z1 to Z3 is the structure indicated by the structural formula (Z101), the structure indicated by the structural formula (Z102), or the structure indicated by the structural formula (Z103).

Examples of the ionic compound capable of forming the structure indicated by the structural formula (1) include the following cations having an imidazoline ring structure and a hydroxyl group:
1-methyl-3-hydroxymethyl imidazolium cation, 1-methyl-3-(2-hydroxyethyl) imidazolium cation, 1-methyl-3-(3-hydroxypropyl) imidazolium cation, 1-methyl-3-(4-hydroxybutyl) imidazolium cation, 1-methyl-3-(6-hydroxyhexyl) imidazolium cation, 1-methyl-3-(8-hydroxyoctyl) imidazolium cation, 1-ethyl-3-(2-hydroxyethyl) imidazolium cation, 1-n-butyl-3-(2-hydroxyethyl) imidazolium cation, 1,3-dimethyl-2-(2-hydroxyethyl) imidazolium cation, 1,3-dimethyl-2-(4-hydroxybutyl) imidazolium cation, 1,3-dimethyl-4-(2-hydroxyethyl) imidazolium cation;
1,3-bishydroxymethyl imidazolium cation, 1,3-bis(2-hydroxyethyl) imidazolium cation, 2-methyl-1,3-bishydroxymethyl imidazolium cation, 2-methyl-1,3-(2-hydroxyethyl) imidazolium cation, 4-methyl-1,3-bis(2-hydroxyethyl) imidazolium cation, 2-ethyl-1,3 bis(2-hydroxyethyl) imidazolium cation, 4-ethyl-1,3-bis(2-hydroxyethyl) imidazolium cation, 2-n-butyl-1,3-bis(2-hydroxyethyl) imidazolium cation, 4-n-butyl-1,3-bis(2-hydroxyethyl) imidazolium cation, 1,3-bis(3-hydroxypropyl) imidazolium cation, 1,3-bis(4-hydroxybutyl) imidazolium cation, 1,3-bis(6-hydroxyhexyl) imidazolium cation, 1,3-bis(8-hydroxyoctyl) imidazolium cation, 1-methyl-2,3-bis(2-hydroxyethyl) imidazolium cation, 1-methyl-3,4-bis(2-hydroxyethyl) imidazolium cation, 1-methyl-3,5-bis(2-hydroxyethyl) imidazolium cation; 1,2,3-trishydroxymethyl imidazolium cation, 1,2,3-tris(2-hydroxyethyl) imidazolium cation, 1,2,3-tris(3-hydroxypropyl) imidazolium cation, 1,2,3-tris(4-hydroxybutyl) imidazolium cation, 1,2,3-tris(6-hydroxyhexyl) imidazolium cation, 1,2,3-tris(8-hydroxyoctyl) imidazolium cation, 1,3,4-tris(2-hydroxyethyl) imidazolium cation, 1,3,4-tris(3-hydroxypropyl) imidazolium cation, 1,3,4-tris(4-hydroxybutyl) imidazolium cation, 1,3,4-tris(6-hydroxyhexyl) imidazolium cation, 1,3,4-tris(8-hydroxyoctyl) imidazolium cation; and derivatives thereof.

A cation having an imidazoline ring structure and having at least one functional group containing an amino group or a glycidyl group is not particularly limited. Examples thereof include cations having a structure in which a hydroxyl group of the cation having an imidazoline ring structure and a hydroxyl group exemplified above has been substituted with a functional group containing an amino group or a glycidyl group.

The structure indicated by the structural formula (2) can be formed of a nitrogen-containing heteroaromatic six-membered ring cation having at least one functional group containing a hydroxyl group, an amino group, or a glycidyl group and further having two nitrogen atoms.

In a case where the structure indicated by the structural formula (2) is a nitrogen-containing heteroaromatic six-membered ring cation having at least one functional group containing a hydroxyl group, the following can be said. That is, a structure having at least one structure indicated by the structural formula (Z101) can be obtained by reacting an ionic compound containing the cation and an isocyanate group.

In a case where the structure indicated by the structural formula (2) is a nitrogen-containing heteroaromatic six-membered ring cation having at least one functional group containing an amino group, the following can be said. That is, a structure having at least one structure indicated by the structural formula (Z102) can be obtained by reacting an ionic compound containing the cation and an isocyanate group.

In a case where the structure indicated by the structural formula (2) is a nitrogen-containing heteroaromatic six-membered ring cation having at least one functional group containing a glycidyl group, the following can be said. That is, a structure having at least one structure indicated by the structural formula (Z103) can be obtained by reacting an ionic compound containing the cation and a hydroxyl group.

Examples of the nitrogen-containing heteroaromatic six-membered ring in the structural formula (2) include a pyrimidine ring and a pyrazine ring. Examples of an ionic compound corresponding to the structure indicated by the structural formula (2) include the following cations having a pyrimidine ring structure and a hydroxyl group:
1,4-bis(2-hydroxyethyl)pyrimidinium cation, 1,5-bis(3-hydroxypropyl)pyrimidinium cation, 1-(4-hydroxybutyl)-4-(2-hydroxyethyl)pyrimidinium cation, 1,4-bis(2-hydroxyethyl)-2-methylpyrimidinium cation; and derivatives thereof.

The cation having a pyrimidine ring structure and having at least one functional group containing an amino group or a glycidyl group is not particularly limited. Examples thereof include cations having a structure in which a hydroxyl group of the cation having a pyrimidine ring structure and a hydroxyl group exemplified above has been substituted with a functional group containing an amino group or a glycidyl group.

The structure indicated by the structural formula (3) can be formed of a nitrogen-containing heteroaromatic ring cation having at least one functional group containing a hydroxyl group, an amino group, or a glycidyl group and further having one nitrogen atom.

In a case where the structure indicated by the structural formula (3) is a nitrogen-containing heteroaromatic ring cation having at least one functional group containing a hydroxyl group, the following can be said. That is, a structure having at least one structure represented by the structural formula (Z101) can be obtained by reacting an ionic compound containing the cation and an isocyanate group.

In a case where the structure indicated by the structural formula (3) is a nitrogen-containing heteroaromatic ring cation having at least one functional group containing an amino group, the following can be said. That is, a structure having at least one structure represented by the structural formula (Z102) can be obtained by reacting an ionic compound containing the cation and an isocyanate group.

In a case where the structure indicated by the structural formula (3) is a nitrogen-containing heteroaromatic ring cation having at least one functional group containing a glycidyl group, the following can be said. That is, a structure having at least one structure represented by the structural formula (Z103) can be obtained by reacting an ionic compound containing the cation and a hydroxyl group.

Examples of the nitrogen-containing heteroaromatic ring in the structural formula (3) include a pyrrole ring, a pyridine ring, and an azepine ring. Among them, a pyridine ring is preferable, and the structure indicated by the structural formula (3) is preferably a structure indicated by the following structural formula (5). In the structural formula (5), Z6, Z7, and d3 are the same as those in the structural formula (3).

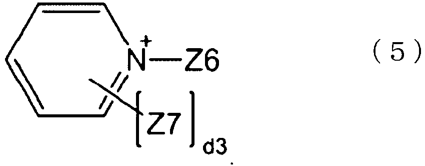

In the structural formula (3), d3 represents an integer of 0 or 1. Z6 and Z7 each independently represent the structure indicated by the structural formula (Z101), the structure indicated by the structural formula (Z102), the structure indicated by the structural formula (Z103), a hydrogen atom, or a hydrocarbon group having 1 to 4 (preferably 1 or 2 and more preferably 1) carbon atoms. Here, at least one of Z6 to Z7 is the structure indicated by the structural formula (Z101), the structure indicated by the structural formula (Z102), or the structure indicated by the structural formula (Z103).

Examples of an ionic compound corresponding to the structure indicated by the structural formula (3) include the following cations having a pyridine ring structure and a hydroxyl group:
1-hydroxymethylpyridinium cation, 1-(2-hydroxyethyl)pyridinium cation, 1-(3-hydroxypropyl)pyridinium cation, 1-(4-hydroxybutyl)pyridinium cation, 1-(6-hydroxyhexyl)pyridinium cation, 1-(8-hydroxyoctyl)pyridinium cation, 2-methyl-1-(2-hydroxyethyl)pyridinium cation, 3-methyl-1-(2-hydroxyethyl)pyridinium cation, 4-methyl-1-(2-hydroxyethyl)pyridinium cation, 3-ethyl-1-(2-hydroxyethyl)pyridinium cation, 3-n-butyl-1-(2-hydroxyethyl)pyridinium cation, 1-methyl-2-hydroxymethylpyridinium cation, 1-methyl-3-hydroxymethylpyridinium cation, 1-methyl-4-hydroxymethylpyridinium cation, 1-methyl-2-(2-hydroxyethyl)pyridinium cation, 1-methyl-3-(2-hydroxyethyl)pyridinium cation, 1-methyl-4-(2-hydroxyethyl)pyridinium cation, 1-ethyl-3-(2-hydroxyethyl)pyridinium cation, 1-n-butyl-3-(2-hydroxyethyl)pyridinium cation, 2-methyl-4-n-butyl-1-(2-hydroxyethyl)pyridinium cation;
1,2-bishydroxymethylpyridinium cation, 1,3-bishydroxymethylpyridinium cation, 1,4-bishydroxymethylpyridinium cation, 1,2-bis(2-hydroxyethyl)pyridinium cation, 1,3-bis(2-hydroxyethyl)pyridinium cation, 1,4-bis(2-hydroxyethyl)pyridinium cation, 1,2-bis(3-hydroxypropyl)pyridinium cation, 1,3-bis(3-hydroxypropyl)pyridinium cation, 1,4-bis(3-hydroxypropyl)pyridinium cation, 1,2-bis(4-hydroxybutyl)pyridinium cation, 1,3-bis(4-hydroxybutyl)pyridinium cation, 1,4-bis(4-hydroxybutyl)pyridinium cation, 1,2-bis(6-hydroxyhexyl)pyridinium cation, 1,3-bis(6-hydroxyhexyl)pyridinium cation, 1,4-bis(6-hydroxyhexyl)pyridinium cation, 1,2-bis(8-hydroxyoctyl)pyridinium cation, 1,3-bis(8-hydroxyoctyl)pyridinium cation, 1,4-bis(8-hydroxyoctyl)pyridinium cation, 2-methyl-1,3-bis(2-hydroxyethyl)pyridinium cation, 2-ethyl-1,3-bis(2-hydroxyethyl)pyridinium cation, 5-methyl-1,3-bis(2-hydroxyethyl)pyridinium cation, 5-ethyl-1,3-bis(2-hydroxyethyl)pyridinium cation;
1,2,4-trishydroxymethylpyridinium cation, 1,2,4-tris(2-hydroxyethyl)pyridinium cation, 1,2,4-tris(3-hydroxypropyl)pyridinium cation, 1,2,4-tris(4-hydroxybutyl)pyridinium cation, 1,2,4-tris(6-hydroxyhexyl)pyridinium cation, 1,2,4-tris(8-hydroxyoctyl)pyridinium cation, 1,3,5-trishydroxymethylpyridinium cation, 1,3,5-tris(2-hydroxyethyl)pyridinium cation, 1,3,5-tris(3-hydroxypropyl)pyridinium cation, 1,3,5-tris(4-hydroxybutyl)pyridinium cation, 1,3,5-tris(6-hydroxyhexyl)pyridinium cation, 1,3,5-tris(8-hydroxyoctyl)pyridinium cation; and derivatives thereof.

The cation having a pyridine ring structure and having at least one functional group containing an amino group or a glycidyl group is not particularly limited. Examples thereof include cations having a structure in which a hydroxyl group of the cation having a pyridine ring structure and a hydroxyl group exemplified above has been substituted with a functional group containing an amino group or a glycidyl group.

The structure indicated by the structural formula (Z101) is a group formed by a reaction between the hydroxyl group contained in the cation and an isocyanate group. The structure indicated by the structural formula (Z102) is a group formed by a reaction between the amino group contained in the cation and an isocyanate group. The isocyanates group that react with the hydroxyl group or the amino group are preferably isocyanate groups contained in the raw material such as polyisocyanate in the polyurethane raw material mixture. The structure indicated by the structural formula (Z103) is a group formed by a reaction between the glycidyl group contained in the cation and a hydroxyl group. The hydroxyl group that reacts with the glycidyl group is preferably a hydroxyl group contained in the raw material such as polyol in the polyurethane raw material mixture.

The polyurethane preferably has, among the structures indicated by the structural formulae (1) to (3), the structure indicated by the structural formula (1). Furthermore, the polyurethane preferably has a structure indicated by, among the structures indicated by the structural formula (1), the structural formula (4). In a case where the polyurethane has the structure indicated by the structural formula (1), the π electron density in the vicinity of the aromatic ring, which causes the adsorption action to CNTs becomes higher due to the chemical structure of the cation.

### Anion

The polyurethane preferably includes an anion. The anion electrically oppositely charged with respect to the cation having the nitrogen-containing heteroaromatic ring structure as a skeleton in the conductive elastic layer of the conductive elastic roller is not particularly limited.

The anion preferably includes at least one anion selected from the group consisting of a fluoroalkylsulfonylimide anion, a fluorosulfonylimide anion, a fluoroalkylsulfonate anion, a fluorosulfonate anion, a fluoroalkylcarboxylic acid anion, a fluoroalkylmethide anion, a fluoroboric acid anion, a fluorophosphoric acid anion, a dicyanamide anion, and a thiocyanate anion.

This is because the anion is chemically extremely stable as compared with halogen anions, sulfate anions, and nitrates anion due to its chemical structure. Chlorine anions or perchlorate anions can also be used as the anion.

Specific examples of the fluoroalkylsulfonylimide anion include at least one selected from the group consisting of fluoroalkylsulfonylimide anions having a fluoroalkyl group having from 1 to 6 carbon atoms such as bis(trifluoromethanesulfonyl)imide anion, bis(pentafluoroethanesulfonyl)imide anion, bis(heptafluoropropansulfonyl)imide anion, bis(nonafluorobutanesulfonyl)imide anion, bis(dodecafluoropentanesulfonyl)imide anion, and bis(perfluorohexanesulfonyl) imide anion, and cyclic fluoroalkylsulfonylimide anions such as N,N-hexafluoropropane-1,3-disulfonylimide.

Specific examples of the fluorosulfonylimide anion include bis(fluorosulfonyl)imide anions.

Specific examples of the fluoroalkylsulfonate anion include at least one selected from the group consisting of trifluoromethanesulfonate anion, fluoromethanesulfonate anion, perfluoroethanesulfonate anion, perfluoropropanesulfonate anion, perfluorobutanesulfonate anion, perfluoropentanesulfonate anion, perfluorohexanesulfonate anion, and perfluorooctanesulfonate anion.

Specific examples of the fluoroalkylcarboxylic acid anion include at least one selected from the group consisting of trifluoroacetic acid anion, perfluoropropionic acid anion, perfluorobutyric acid anion, perfluorovaleric acid anion, and perfluorocaproic acid anion.

Specific examples of the fluoroalkylmethide anion include at least one selected from the group consisting of tris(trifluoromethanesulfonyl)methide anion, tris(perfluoroethanesulfonyl)methide anion, tris(perfluoropropansulfonyl)methide anion, tris(perfluorobutansulfonyl)methide anion,

tris(perfluoropentansulfonyl)methide anion, tris(perfluorohexanesulfonyl)methide anion, and tris(perfluorooctansulfonyl)methide anion.

Specific examples of the fluoroboric acid anion include tetrafluoroboric acid anion.

Specific examples of the fluorophosphoric acid anion include hexafluorophosphoric acid anion.

The anion is preferably at least one anion selected from the group consisting of a bis(fluorosulfonyl)imide anion and a bis(trifluoromethanesulfonyl)imide anion (anions expressed by chemical formulae (CF₃SO₂)₂N⁻ and (FSO₂)₂N⁻, respectively) and more preferably a bis(fluorosulfonyl)imide anion.

### Other Configuration Materials

In the conductive elastic layer of the conductive elastic roller, it is possible to use a catalyst, a foaming agent, a foam stabilizer, and other auxiliary agents as necessary.

The catalyst is not particularly limited, and a catalyst can be appropriately selected from various kinds of known catalysts and used. For example, amine-based catalysts (triethylenediamine, bis(dimethylaminoethyl) ether, N,N,N',N'-tetramethylhexanediamine, 1,8-diazabicyclo(5,4,0)undecene-7,1,5-diazabicyclo(4,3,0)nonene-5,1,2-dimethylimidazole, N-ethylmorpholine, N-methylmorpholine, and the like), organometallic catalysts (tin octylate, tin oleate, dibutyltin dilaurate, dibutyltin diacetate, tetra-i-propoxytitanium, tetra-n-butoxytitanium, tetrakis(2-ethylhexyloxy)titanium, and the like), and acid salt catalysts obtained by lowering the initial activities of the amine-based catalysts and the organometallic catalysts (carboxylates, formates, octylates, borates, and the like) can be used. One kind of the catalyst may be used, or two or more kinds may be used together.

The foaming agent is not particularly limited, and a foaming agent can be appropriately selected from various kinds of known foaming agents and used. In particular, water reacts with the polyisocyanate to generate carbon dioxide gas and is thus suitably used as the foaming agent. In addition, other foaming agents may also be jointly used with water.

The foam stabilizer is not particularly limited, and a foam stabilizer can be appropriately selected from various kinds of known foam stabilizers and used.

As the other auxiliary agents, a crosslinking agent, a flame retardant, a coloring agent, an ultraviolet absorbent, an antioxidant, a conductive filler, or the like may be used as necessary to an extent that the effect of the present disclosure is not hindered. As the conductive filler, it is possible to use carbon black; and conductive metals such as aluminum and copper. Furthermore, other ionic compounds may also be jointly used to an extent that the effect of the present disclosure is not impaired. The sum of the contents of the ionic compounds is preferably from 0.1 parts by mass to 30 parts by mass with respect to 100 parts by mass of a binder resin that forms the conductive elastic layer.

### Method for Forming Conductive Elastic Layer

A method for forming the conductive elastic layer is not particularly limited. Here, a forming method of a case where the conductive elastic layer has a foamed structure as one form of the conductive elastic roller will be described, but the forming method is not limited thereto.

In a case where the conductive elastic layer has a foamed structure, a foaming method is not particularly limited. It is possible to use any method such as a method in which a foaming agent is used or a method in which foam is incorporated by mechanical stirring. The foaming ratio may be determined as appropriate and is not particularly limited.

For example, the following materials 1 to 6 are mixed together and reacted while being foamed, whereby the conductive elastic layer of the conductive elastic roller can be obtained.
1. As a material that forms the binder resin,
   1-1. at least one polyol selected from the group consisting of polyether polyol, polyester polyol, and the like, and
   1-2. polyisocyanate
2. A compound having a nitrogen-containing heteroaromatic ring structure and containing at least one functional group selected from the group consisting of a hydroxyl group, an amino group, and a glycidyl group
3. CNT
4. Catalysts
5. Foam stabilizer
6. Foaming agent

It is preferable to have fabricated a CNT-containing composite material containing a part or all of the above-described 2 and 3, or a part or all of 2, 3, and a part of 1-1 in advance. It is more preferable to have fabricate the composite material by a method including a step of defibrating CNTs by applying a shearing force in the presence of the compound including a nitrogen-containing heteroaromatic ring structure. This is because it is possible to suppress the defibrated CNTs aggregating again by inducing adsorption between the compound including a nitrogen-containing heteroaromatic ring structure and CNTs in advance.

A method for applying a shearing force is not particularly limited, and examples thereof include a kneading method with an apparatus such as a kneader, a roll kneader, or a twin screw kneader, a granulation method in which CNTs are made to collides with each other, and furthermore, a simple method in which CNTs are kneaded with a pestle in a mortar. Among these, the method for applying a shearing with a roll kneader is preferable since a shearing force for defibration can be applied while cutting of CNTs is prevented, and defibration is easily controlled with apparatus operating conditions.

In the composite material, the CNT amount is preferably 3 to 300 parts by mass and more preferably 10 to 200 parts by mass with respect to 100 parts by mass of the compound including a nitrogen-containing heteroaromatic ring structure. Within the above-described range, a sufficient shearing force for defibration can be applied, and on the other hand, reaggregation of CNTs is also less likely to occur. In producing the CNT-containing composite material, materials other than 2 and 3 may be contained.

The sum of the CNT amounts in a material for forming the conductive elastic layer is preferably set within the following range from the viewpoint of conductivity and suppression of resistance variation due to electricity conduction. That is, the sum of the CNT amounts in the conductive elastic layer is, for example, 0.005 to 10.00 parts by mass with respect to 100 parts by mass of the binder resin. The sum is preferably 0.01 to 1.00 part by mass, more preferably 0.01 to 0.50 parts by mass, and still more preferably 0.02 to 0.10 parts by mass.

In addition, the sum of the contents of the nitrogen-containing heteroaromatic ring structures is preferably within the following range from the viewpoint of conductivity and suppression of resistance variation due to electricity conduction. The content of the nitrogen-containing heteroaromatic ring structure (preferably the total of the structure indicated by the structural formula (1), the structure indicated by the structural formula (2), and the structure indicated by the structural formula (3)) is, for example, 0.005 to 10.00 mass% based on the mass of the conductive elastic layer. The content is preferably 0.01 to 5.00 mass%, more preferably 0.01 to 1.00 mass%, and still more preferably 0.05 to 0.50 mass%.

When the materials 1 to 6 are reacted while being foamed, the temperature or time at the time of mixing the materials 1 to 6 is not particularly limited. The mixing temperature is normally from 10°C to 90°C and preferably within a range from 20°C to 80°C. In addition, the mixing time is normally from one second to 20 minutes and preferably from three seconds to 15 minutes while depending on the structure of a mixing unit to be used, the rotation conditions, or the like.

A method for joining the substrate and the conductive elastic layer having a foamed structure is not particularly limited, and it is possible to use a method in which the substrate is disposed in a mold in advance and the raw material mixture as described above is cast and cured; a method in which the raw material mixture is formed into a predetermined shape, which is to be a foamed elastic layer, and then made to adhere to the substrate. In any method, it is possible to provide an adhesive layer between the substrate and the conductive elastic layer having a foamed structure as necessary. As this adhesive layer, a known material such as an adhesive or a hot melt sheet can be used.

In the case of casting and curing the raw material mixture, a mold release agent may be applied to the inner wall of the mold in advance. As the mold releasing agent, known mold release agents can be used. Examples thereof include aqueous mold release agents containing a wax component and a silicone oil and mold release agents obtained by dissolving a fluorine resin in a fluorine-based solvent. Examples of a fluororesin-containing mold release agent include fluororesin-containing mold release agents (trade name: FLUORO SURF, FG-5093F130-0.5, manufactured by Fluoro Technology Co., Ltd.).

A method for forming the shape of the conductive elastic layer, that is, the foamed elastic layer as the conductive elastic roller having a foamed structure is not particularly limited. For example, in addition to a method in which the raw material mixture is cast in the mold having a predetermined shape described above or the like, the following methods or the like can be used. A method in which polyurethane foam in a block state is cut into predetermined dimensions by cutting, a method in which the raw material is polished into predetermined dimensions, or a method obtained by combining these methods as appropriate.

The state of these after the reaction can be confirmed by analysis with known means, for example, pyrolysis-GC/MS, FT-IR, NMR, GPC, or the like.

### Electrophotographic Image Forming Apparatus

An electrophotographic image forming apparatus according to the present disclosure includes the conductive elastic roller according to the present disclosure. That is, the conductive elastic roller can be used as at least any of a developing roller, a charging roller, a transfer roller, and a toner supply roller in the electrophotographic image forming apparatus, and in particular, the conductive elastic roller can be suitably used as a toner supply roller.

The conductive elastic roller can also be applied to any developing apparatus of a non-contact type developing apparatus or contact type developing apparatus in which a magnetic one-component toner or a non-magnetic one-component toner is used and a developing apparatus in which a two-component toner is used.

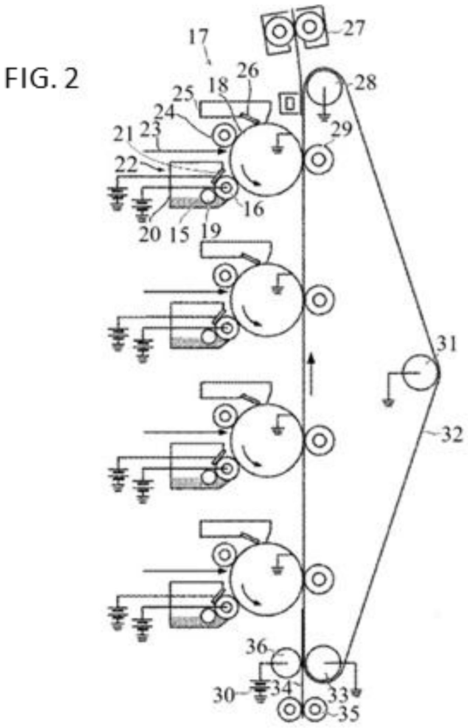

FIG. 2 is a schematic cross-sectional view illustrating one example of the electrophotographic image forming apparatus in which the conductive elastic roller is mounted as a toner supply roller of a contact type developing apparatus in which a one-component toner is used. A developing apparatus 22 includes a toner container 20 storing a toner 15 as a one-component toner, a developing roller 16, a toner supply roller 19 that supplies the toner to the developing roller 16, and a developing blade 21 that regulates the thickness of a toner layer on the developing roller 16.

The developing roller 16 is positioned in an opening portion extending in the longitudinal direction in the toner container 20 and is installed in contact with an electrophotographic photoreceptor 18. The electrophotographic photoreceptor 18, a cleaning blade 26, a waste toner storage container 25, and a charging roller 24 may be disposed in the main body of the electrophotographic image forming apparatus. The developing apparatus 22 is prepared for toners of black (Bk), cyan (C), magenta (M), and yellow (Y) and enables color printing.

Hereinafter, a printing operation of the electrophotographic image forming apparatus will be described. The electrophotographic photoreceptor 18 rotates in an arrow direction and is uniformly charged with the charging roller 24 for charging the electrophotographic photoreceptor 18. Next, an electrostatic latent image is formed on the surface of the electrophotographic photoreceptor 18 with laser light 23, which is exposure means. The electrostatic latent image is visualized (developed) as a toner image with the toner 15 from the developing roller 16 disposed in contact with the electrophotographic photoreceptor 18 imparted by the developing apparatus 22. The development is a so-called reversal development in which a toner image is formed on an exposure part.

The toner image formed on the electrophotographic photoreceptor 18 is transferred to paper 34, which is a recording medium, with transfer rollers 29, which are transfer members. The paper 34 is fed into the apparatus via a paper feed roller 35 and an adsorption roller 36, and is conveyed between the electrophotographic photoreceptor 18 and the transfer rollers 29 with an endless belt-like transfer conveyor belt 32. The transfer conveyor belt 32 is operated with a driven roller 33, a driver roller 28, and a tension roller 31. A voltage is applied from a bias power source 30 to the developing roller 16, the developing blade 21, the toner supply roller 19, and the adsorption roller 36.

The paper 34 to which the toner image has been transferred is subjected to a fixing treatment with a fixing apparatus 27 and then ejected to the outside of the apparatus, and the printing operation is finished. Meanwhile, transfer residual toner remaining on the electrophotographic photoreceptor 18 without being transferred is scraped off with the cleaning blade 26, which is a cleaning member for cleaning the surface of the photoreceptor, and stored in the waste toner storage container 25. The cleaned electrophotographic photoreceptor 18 repeats the above-described printing operation.

### Process Cartridge

The present disclosure relates to a process cartridge configured to be attachable to and detachable from the main body of the electrophotographic image forming apparatus, The process cartridge includes the conductive elastic roller. The conductive elastic roller having the conductive elastic layer can be used as at least any of the charging roller, the developing roller, the transfer roller, and the toner supply roller. In particular, the conductive elastic roller can be suitably used as the toner supply roller 19 in the process cartridge.

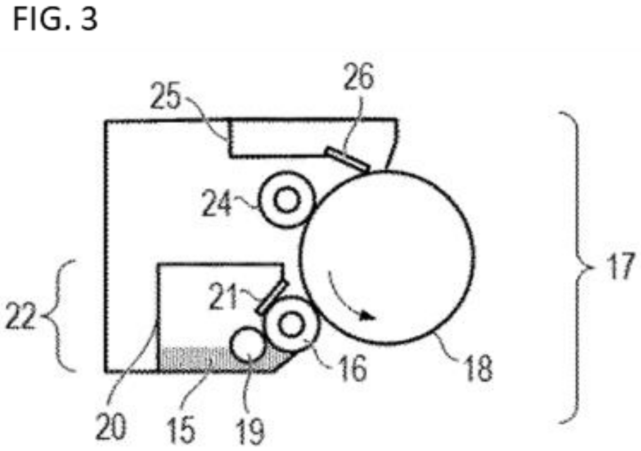

FIG. 3 is a schematic cross-sectional view illustrating one example of the process cartridge. A process cartridge 17 is configured to be attachable to and detachable from the main body of the electrophotographic image forming apparatus. In addition, in the process cartridge 17, the developing apparatus 22, the electrophotographic photoreceptor 18, the cleaning blade 26, which is cleaning means, the waste toner storage container 25, and the charging roller 24, which is charging means, are integrated with one another.

Here, the developing apparatus 22 includes the developing roller 16, which is developing means, and the developing blade 21. The developing apparatus 22 further includes the toner container 20, and the toner container 20 is filled with the toner 15. The toner 15 in the toner container 20 is supplied to the surface of the developing roller 16 with the toner supply roller 19, and a layer of the toner 15 having a predetermined thickness is formed on the surface of the developing roller 16 with the developing blade 21. Each configuration in the process cartridge 17 is the same as the contents described in FIG. 2.

### Method for Supplying Toner with Toner Supply Roller

As a method for supplying the toner to the developing roller 16 with the toner supply roller 19, there are a mechanical supply method and an electrical supply method.

The mechanical supply method is a method in which the toner is held on the surface layer of the toner supply roller 19 and the toner is supplied by contact with the developing roller 16. At this time, when the surface layer of the toner supply roller 19 is a layer having voids such as a foamed layer, the amount of the toner held increases, and it is possible to more efficiently supply the toner. Furthermore, when the surface layer of the toner supply roller 19 is a foamed elastic layer, the foamed elastic layer contracts at the time of contact with the developing roller 16, whereby the toner held in the voids is pressed out, and the discharge of the toner from the toner supply roller 19 is promoted.

In the electrical supply method, a biasing force of the charged toner due to a bias potential difference between the bias applied to the toner supply roller 19 and the bias applied to the developing roller 16 is used. Specifically, in a case where the polarity of the bias potential difference is the same polarity as the normal charging polarity of the toner, a biasing force from the toner supply roller 19 toward the developing roller 16 acts on the toner in a contact portion. This supplies the toner.

### Examples

Hereinafter, the present disclosure will be described in more detail using examples and comparative examples, but the aspects of the present disclosure are not limited thereto.

An ionic compound including a nitrogen-containing heteroaromatic ring structure, which is a raw material of polyurethane that was contained in a conductive elastic layer of a conductive elastic roller was synthesized.

### Synthesis of Compositions Containing Ionic Compound

### Composition C-1

A stirring bar and 60 ml of tetrahydrofuran (THF, manufactured by Kanto Chemical Co., Inc.) were charged into an eggplant flask equipped with a Dimroth condenser, 24.0 g (0.60 mol) of sodium hydride (60 mass%, dispersed in liquid paraffin, manufactured by Tokyo Chemical Industry Co., Ltd.) was dispersed, and the eggplant flask was cooled in an ice bath. A solution of 10.2 g (0.15 mol) of imidazole (manufactured by Tokyo Chemical Industry Co., Ltd.) dissolved in 60 ml of THF was slowly added dropwise, the ice bath was then removed, and the components were stirred at room temperature for two hours.

47.6 g (0.38 mol) of 2-bromoethanol (manufactured by Tokyo Chemical Industry Co., Ltd.) was added thereto at room temperature and then heated and refluxed at 70°C for seven hours. A reaction liquid after a reaction was filtered, an insoluble matter was washed off with THF, and the solvent of the resultant filtrate was distilled away under reduced pressure. The resultant product was dissolved in 590.5g of water, 179.3 g of an ion-exchanged resin DOWEX 550A OH (manufactured by DuPont) was added thereto, and the components were stirred at room temperature for one hour.

The ion-exchanged resin was filtered, and an aqueous solution of 27.2g of imidodisulfurylfluoride lithium (manufactured by Aaron Chemicals LLC) dissolved in 379.6 g of water was injected by dropwise addition over two hours to the resultant aqueous solution. During the injection by dropwise addition, the pH was confirmed at the same time, and the dropwise addition was finished at a pH of 6.3. The solvent of the resultant aqueous solution was distilled away under reduced pressure, and a composition C-1 according to Example 1 was obtained. The ionic compound 1 that was contained in the composition C-1 is a compound represented by the following structural formula (C1).

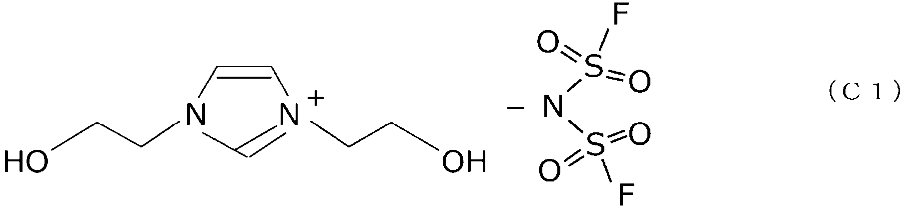

### Compositions C-2, 3, and 6

Compositions C-2, 3 and 6 were obtained in the same manner as in the synthesis of the composition C-1 except that the anionic raw material and the amount thereof blended were changed to
13.4 g of tetrafluoroborate acid (manufactured by FUJIFILM Wako Pure Chemical Co., Ltd.) for C-2,
58.0 g of thiocyanic acid (manufactured by A2B Chem LLC) for C-3, and
42.2 g of bis(trifluoromethanesulfonyl)imide (manufactured by Tokyo Chemical Industries, Ltd.) for C-6.

For ionic compounds 2, 3, and 6 that were contained in the compositions C-2, 3, and 6, cationic structures were the same as that of the ionic compound 1, and anions were a tetrafluoroboric acid anion, a thiocyanate anion, and a bis(trifluoromethanesulfonyl)imide anion, respectively.

### Composition C-4

A stirring bar and 60 ml of tetrahydrofuran (THF, manufactured by Kanto Chemical Co., Inc.) were charged into an eggplant flask equipped with a Dimroth condenser, 24.0 g (0.60 mol) of sodium hydride (60 mass%, dispersed in liquid paraffin, manufactured by Tokyo Chemical Industry Co., Ltd.) was dispersed, and the eggplant flask was cooled in an ice bath. A solution of 10.2 g of 2-methylimidazole-1-ethanol (manufactured by Sigma-Aldrich CO. LLC) dissolved in 60 ml of THF was slowly added dropwise, the ice bath was then removed, and the components were stirred at room temperature for two hours.

47.6 g (0.38 mol) of 2-bromoethanol (manufactured by Tokyo Chemical Industry Co., Ltd.) was added thereto at room temperature and then heated and refluxed at 70°C for seven hours. A reaction liquid after a reaction was filtered, an insoluble matter was washed off with THF, and the solvent of the resultant filtrate was distilled away under reduced pressure. The resultant product was dissolved in 590.5g of water, 179.3 g of an ion-exchanged resin DOWEX 550A OH (manufactured by DuPont) was added thereto, and the components were stirred at room temperature for one hour.

The ion-exchanged resin was filtered, and an aqueous solution of 27.2g of imidodisulfurylfluoride lithium (manufactured by Aaron Chemicals LLC) dissolved in 379.6 g of water was injected by dropwise addition over two hours to the resultant aqueous solution. During the injection by dropwise addition, the pH was confirmed at the same time, and the dropwise addition was finished at a pH of 6.3. The solvent of the resultant aqueous solution was distilled away under reduced pressure, and a composition C-4 according to Example 1 was obtained. The ionic compound 4 that was contained in the composition C-4 is a compound represented by the following structural formula (C4).

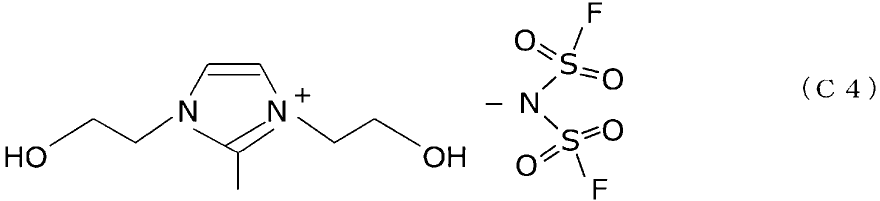

### Composition C-5

A composition C-5 was obtained in the same manner as in the synthesis of the composition C-4 except that the anionic raw material and the amount thereof blended were changed to 58.0 g of thiocyanic acid (manufactured by A2B Chem LLC). For an ionic compound 5 that was contained in the composition C-5, a cationic structure was the same as that of the ionic compound 4, and an anion was a thiocyanate anion.

### Composition C-7

15.0 g of imidazole-2-ethanol (manufactured by Sigma-Aldrich CO. LLC) and 9.2 g of sodium hydride (60%, dispersed in liquid paraffin) (manufactured by Tokyo Chemical Industries, Ltd.) were dissolved in 60.0 g of tetrahydrofuran under a nitrogen atmosphere. 42.1 g of 2-bromoethanol (manufactured by Tokyo Chemical Industries, Ltd.) dissolved in 80.0 g of tetrahydrofuran was added dropwise thereto at room temperature over 30 minutes and then heated and refluxed at 85°C for 12 hours.

Next, 100 ml of water was added to a reaction solution, and the solvent was distilled away under reduced pressure. 200 ml of Ethanol was added to a residue and stirred at room temperature, an insoluble material was removed by celite filtration, and the solvent was then distilled away again under reduced pressure.

A resultant product was dissolved in 200 ml of pure water, and 48.3 g of lithium N,N-bis(trifluoromethanesulfonyl)imide (trade name: EF-N115, manufactured by Mitsubishi Materials Electronic Chemicals Co., Ltd.) was added as an anion raw material, and the components were stirred at room temperature for one hour. 200 ml of ethyl acetate was added to a reaction solution, and an organic layer was washed using 120 g of ion-exchanged water three times.

Next, the ethyl acetate was distilled away under reduced pressure, and a composition C-7 was obtained. An ionic compound 7 that was contained in the composition C-7 is a compound represented by the following structural formula (C7).

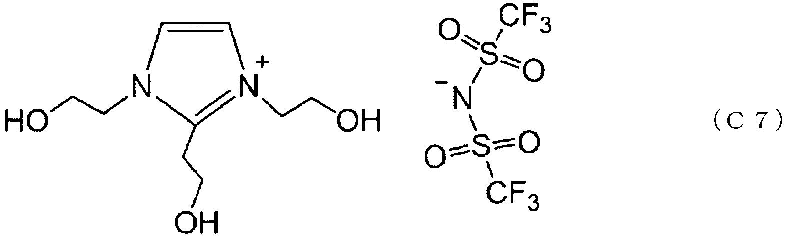

### Composition C-8

15.0 g of 5-Methylpyrazine-2-methanol (manufactured by Sigma-Aldrich CO. LLC) and 9.2 g of sodium hydride (60%, dispersed in liquid paraffin) (manufactured by Tokyo Chemical Industries, Ltd.) were dissolved in 80.0 g of tetrahydrofuran. 18.9 g of Methyl iodide (manufactured by Tokyo Chemical Industries, Ltd.) dissolved in 80.0 g of tetrahydrofuran was added dropwise thereto at room temperature over 30 minutes, and then heated and refluxed at 85°C for 12 hours.

Next, 100 ml of water was added to a reaction solution, and the solvent was distilled away under reduced pressure. 200 ml of Ethanol was added to a residue and stirred at room temperature, an insoluble material was removed by celite filtration, and the solvent was then distilled away again under reduced pressure.

A resultant product was dissolved in 100 ml of pure water, and 38.1 g of lithium N,N-bis(trifluoromethanesulfonyl)imide (trade name: EF-N115, manufactured by Mitsubishi Materials Electronic Chemicals Co., Ltd.) was added as an anion raw material, and the components were stirred at room temperature for one hour. 100 ml of ethyl acetate was added to a reaction solution, and an organic layer was washed using 80 g of ion-exchanged water three times.

Next, the ethyl acetate was distilled away under reduced pressure, and a composition C-8 was obtained. An ionic compound 8 that was contained in the composition C-8 is a compound represented by the following structural formula (C8).

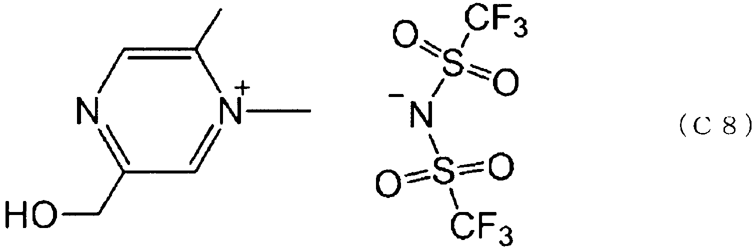

### Composition C-9

15.0 g of 4-Pyridine butanol (manufactured by Sigma-Aldrich CO. LLC) was dissolved in 45.0 g of acetonitrile, 16.7 g of 4-bromo-1-butanol (manufactured by Tokyo Chemical Industries, Ltd.) was added dropwise thereto at room temperature over 30 minutes, and the components were then heated and refluxed at 90°C for 12 hours.

Next, a reaction solution was cooled to room temperature, and acetonitrile was distilled away under reduced pressure. A resultant substance was washed with 30.0 g of diethyl ether, and a supernatant was removed by liquid separation. The washing and liquid separation operation was repeated three times to obtain a residue. Furthermore, the resultant residue was dissolved in 110.0 g of dichloromethane, 31.4 g of an anion raw material dissolved in 40.0 g of ion-exchanged water was added dropwise over 30 minutes, and the components were then stirred at 30°C for 12 hours. Lithium N,N-bis (trifluoromethanesulfonyl)imide (trade name: EF-N115, manufactured by Mitsubishi Materials Electronic Chemicals Co., Ltd.) was used as the anion raw material.

A resultant solution was liquid-separated, and an organic layer was washed with 80.0 g of ion-exchanged water three times. Subsequently, the dichloromethane was distilled away under reduced pressure to obtain a composition C-9. An ionic compound 9 that was contained in the composition C-9 is a compound represented by the following formula (C9).

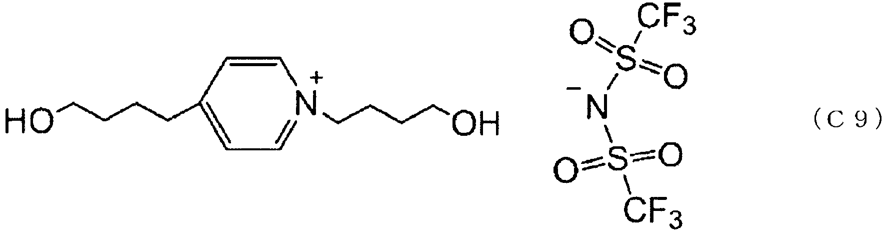

### Composition C-10

As a cation raw material, 15.0 g of imidazole (manufactured by Tokyo Chemical Industries, Ltd.) was dissolved in 50.0 g of dichloromethane, 44.9 g of epichlorohydrin (manufactured by Tokyo Chemical Industries, Ltd.) dissolved in 50.0 g of dichloromethane was added dropwise thereto at room temperature over 30 minutes, and the components were heated and refluxed for six hours. Next, a reaction solution was cooled to room temperature, 200 ml of a 5% sodium carbonate aqueous solution was added thereto and stirred for 30 minutes, liquid was separated, and a dichloromethane layer was washed using 120 g of ion-exchanged water twice. Next, the dichloromethane was distilled away under reduced pressure to obtain a residue. Furthermore, the resultant residue was dissolved in 50.0 g of acetone.

After that, 69.6 g of an anion raw material dissolved in 150.0 g of ion-exchanged water was added dropwise thereto over 30 minutes, and the components were then stirred at 30°C for two hours. Lithium N,N-bis (trifluoromethanesulfonyl)imide (trade name: EF-N115, manufactured by Mitsubishi Materials Electronic Chemicals Co., Ltd.) was used as the anion raw material. A resultant solution was liquid-separated, and an organic layer was washed using 50.0 g of ion-exchanged water three times. Subsequently, acetone was distilled away under reduced pressure to obtain a composition C-10. An ionic compound 10 that was contained in the composition C-10 is a compound represented by the following formula (C10).

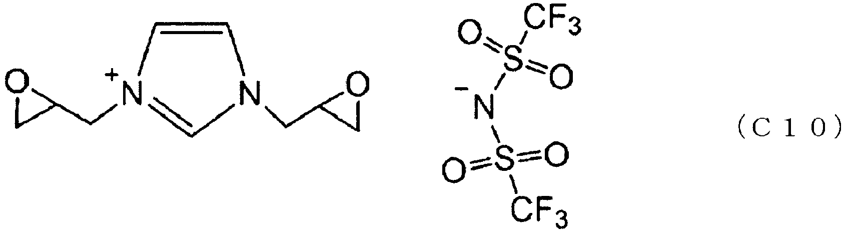

### Composition C-11

15.0 g of 1-(3-Aminopropyl) imidazole (manufactured by Sigma-Aldrich CO. LLC) and 8.6 g of sodium hydride (60%, dispersed in liquid paraffin) (manufactured by Tokyo Chemical Industries, Ltd.) were dissolved in 80.0 g of tetrahydrofuran. 18.7 g of Methyl iodide (manufactured by Tokyo Chemical Industries, Ltd.) dissolved in 80.0 g of tetrahydrofuran was added dropwise thereto at room temperature over 30 minutes, and the components were then heated and refluxed at 85°C for 12 hours. Next, 100 ml of water was added to a reaction solution, and the solvent was distilled away under reduced pressure. 200 ml of Ethanol was added to a residue and stirred at room temperature, an insoluble material was removed by celite filtration, and the solvent was then distilled away again under reduced pressure.

A resultant product was dissolved in 100 ml of pure water, and 37.8 g of lithium N,N-bis(trifluoromethanesulfonyl)imide (trade name: EF-N115, manufactured by Mitsubishi Materials Electronic Chemicals Co., Ltd.) was added as an anion raw material, and the components were stirred at room temperature for one hour. 100 ml of ethyl acetate was added to a reaction solution, and an organic layer was washed using 80 g of ion-exchanged water three times. Next, the ethyl acetate was distilled away under reduced pressure, and a composition C-11 was obtained. An ionic compound 11 that was contained in the composition C-11 is a compound represented by the following structural formula (C11).

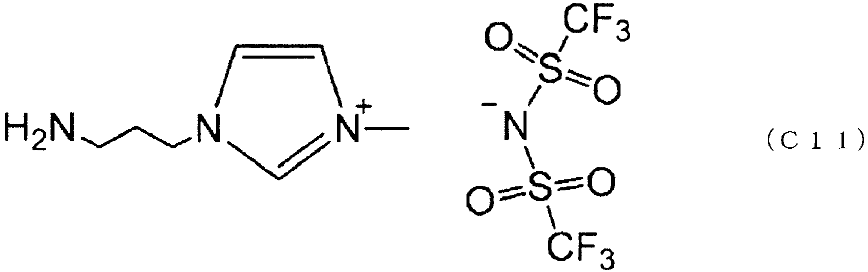

### Example 1

### Fabrication of Toner Supply Roller

As the conductive elastic roller, a toner supply roller having a conductive elastic layer with a foamed structure was fabricated by the following step.

### Fabrication of Composite Material M-1

The following materials (a), (b), and (c) configuring composite materials containing CNTs and a compound including a nitrogen-containing heteroaromatic ring structure were prepared.

In order to bring the configuration materials into contact with one another without applying shearing forces and incorporate the configuration materials, the above-described materials were injected into a plastic container, and vacuum deairing was performed in each container to obtain a mixture.

An open roll apparatus (front and rear rolls manufactured by Kansai Roll Co., Ltd., each roll being six inches) was used to defibrate the mixture by applying a shearing force. In the present apparatus, a shearing force is applied to an object by passing the object through a roll gap while rotating the two front and rear rolls. 30 g of the above-described mixture was kneaded for 30 minutes under the conditions of a roll gap of 1 mm, a front roll rotation speed of 10 rpm, and a rear roll rotation speed of 8 rpm to obtain a composite material M-1.
(a) CNTs (ZEONANO SG101 manufactured by ZEON) 10 parts by mass
(b) Compound (ionic compound) composition having nitrogen-containing heteroaromatic ring structure C-1: 40 parts by mass
(c) Polyol (polyethylene propylene ether triol having a number-average molecular weight of 2000, trade name: ACTCOL EP-550N; manufactured by Mitsui Chemicals, Inc.) 50 parts by mass

### Fabrication of Conductive Elastic Layer Having Foamed Structure

The following materials (A) to (G) were used. Half of the material (B) and the material (A) were injected into a plastic container, a blade portion of a stirring-type disperser (HOMOGENIZING DISPER Model 2.5 manufactured by Primix Corp.) was put into the plastic container, and the materials were stirred under the condition of 3200 rpm and 20 minutes. The other half of the remaining material (B) was mixed and vacuum-deaired to fabricate a precursor slurry.

A primer (trade name: DY35-051; manufactured by Dow Toray Co., Ltd.) was applied to a stainless steel (SUS304) core metal having a diameter of 6 mm and a full length of 278.9 mm and baked in an oven heated to a temperature of 180°C for 20 minutes to obtain a substrate. In addition, the substrate was disposed in a mold made up of a cylindrical member having an inner diameter 16.5 mm and an inner surface coated with a mold release agent, an upper bridge member and a lower bridge member.

The above-described precursor slurry and the materials (C) to (F) were injected into the plastic container and then stirred with a planetary centrifugal mixer (Awatori Rentaro ARV - 931TWIN manufactured by Thinky Corporation) under the condition of 2000 rpm and three minutes. A urethane rubber composition obtained by injecting (G) into a stirred liquid and mixing both was poured into a cavity formed in a mold. Subsequently, the mold was heated to 70°C, the urethane rubber composition was foamed and cured for 10 minutes, and a substrate having a foamed elastic layer formed on the peripheral surface was released from the mold. A toner supply roller T-1, which is a conductive elastic roller according to Example 1, having a conductive elastic layer with a foamed structure having a diameter of 16.5 mm on the outer periphery of the substrate was fabricated.
(A): Composite material M-1: 0.5 parts by mass
(B): Polyol (polyethylene propylene ether triol having a number-average molecular weight of 2000, trade name: ACTCOL EP-550N; manufactured by Mitsui Chemicals, Inc.) 100 parts by mass
(C): Silicone foam stabilizer (trade name: NIAX SILICONE L-3640, manufactured by Momentive Performance Materials Inc.) 0.3 parts by mass
(D): Amine catalyst A (N-methylmorpholine manufactured by Tokyo Chemical Industries, Ltd.) 1 part by mass
(E): Amine catalyst B (DABCO 33-LV, manufactured by Evonik Japan Co., Ltd.) 0.5 parts by mass
(F): Foaming agent (water) 1.5 parts by mass
(G) Polyisocyanate admixture (containing NCO = 45% and MDI = 20%, trade name: COSMONATE TM20; manufactured by Mitsui Chemicals, Inc.) 24.7 parts by mass

Table 1 shows the materials (a) and (b) used, corresponding nitrogen-containing heteroaromatic ring structures, and Z1 to Z3 in each structural formula.

### Evaluation of Openness of Conductive Elastic Layer

The openness of the surface as the toner supply roller was evaluated. A fivefold objective lens was mounted in a laser microscope (trade name: VK-X100, manufactured by Keyence Corporation), and images of 280 mm × 210 mm regions on the surface of the conductive elastic layer were captured at 20 places. At that time, brightness was adjusted so that portions which touched voids (cells) became as dark as possible and portions which touched the skeleton became as bright as possible.

The images obtained here were imported into image processing software (trade name: Image-Pro Plus, manufactured by Planetron Co., Ltd.), and the skeleton side and the void (cell) side were automatically binarized into white and black, respectively, by a "threshold" treatment. Furthermore, all cell diameters and the total number of the cells of the resultant image were calculated, and the average cell diameter and the average cell number (cells/inch²) per unit region were calculated.

### Observation of CNTs in Conductive Elastic Layer and Evaluation of Lengths

The present analysis was performed to confirm the lengths in the short-side direction and the long-side direction of CNTs in the toner supply roller.

The lengths in the short-side direction were measured by obtaining a CNT surface image using a scanning electron microscope (Fe-SEM ULTRA55 manufactured by Zeiss) and performing calculation by image analysis. As a sample for observation, a part of the conductive elastic layer on the toner supply roller was cut out, then cooled to -100°C, and cut into a thin plate having a thickness of 1 µm using cryo microtome (trade name: UC-6, manufactured by Leica Microsystems GmbH).

At this time, the sample for observation was cut into three thin pieces to include three mutually perpendicular surfaces (that is, an XY surface, an YZ surface, and a ZX surface in XYZ surfaces) so that accurate measurement was possible regardless of how CNTs inside were disposed due to orientation or the like. Five places on each thin piece were observed in a measurement mode of an in-lens SE detector for an exposure time of four minutes, and an image for analysis was obtained by converting 500 square nanometers into image information of 1024 pixels or more. At the time of this observation and image acquisition, the image was captured so that brightness and contrast differed between CNTs and other places.

The resultant image was imported into image processing software (trade name: Image-Pro Plus, manufactured by Planetron Co., Ltd.), and CNTs were automatically extracted as fibers by a "fiber separation" treatment. The angle deviation was set to 60° so that even curved CNTs were counted as fibers, and the fiber lengths equivalent to the lengths in the short-side direction were then calculated by a Measure Thickness treatment. Since the lengths in the short-side direction of CNT were calculated as fiber widths, data of all fiber widths at five places of all thin pieces were read out with spreadsheet software, and the average of all numerical values was regarded as the number-average value of the lengths in the short-side direction of CNTs. The lengths in the short-side direction become shorter as defibration proceeds and become close to approximately 5 nm which is the short-side length of single CNT.

The lengths in the long-side direction can be obtained by three-dimensional measurement using FIB-SEM. FIB-SEM refers to a method in which a sample is processed with an FIB (focused ion beam) apparatus and an exposed cross section is observed with SEM (scanning electron microscope). In order to examine the three-dimensional structure, a large number of photographs are acquired by repeating continuous processing and observation, and a 3D reconstruction treatment of SEM images thereof is then performed with computer software to construct the sample structure as a three-dimensional image, which makes the examination of the three-dimensional structure possible.

As a specific method for measuring the lengths in the long-side direction of CNTs, three-dimensional images were acquired using FIB-SEM (manufactured by FEI Company), and the above-described configuration was confirmed from the images. Test specimens were cut out from 30 places on the conductive elastic layer, three-dimensional measurement was performed using FIB-SEM, processing and observation were repeated at 5 µm intervals up to a depth of 300 µm, and 9 µm × 6 µm rectangular parallelepiped images were measured. Upon measuring the sample at the 30 places, a different processing direction that was one of the three mutually perpendicular directions, that is, a direction parallel to the substrate, a direction toward the substrate from the surface, and a direction perpendicular to both of the above-described two directions, was selected every 10 places so that measurement was possible regardless of whether CNTs were oriented randomly or in a certain direction.

In order to suitably observe CNTs, it is also preferable to perform a pretreatment by which a suitable contrast can be obtained between CNTs and other portions. From images obtained thereafter, the lengths in the long-side direction of all CNTs that were contained in a 9 µm × 6 µm × 300 µm rectangular parallelepiped region were measured using 3D visualization and analysis software Avizo (registered trademark, manufactured by FEI Company), and the average value thereof was regarded as the number-average value of the lengths in the long-side direction.

### Measurement of Initial Resistance Value R1 of Toner Supply Roller

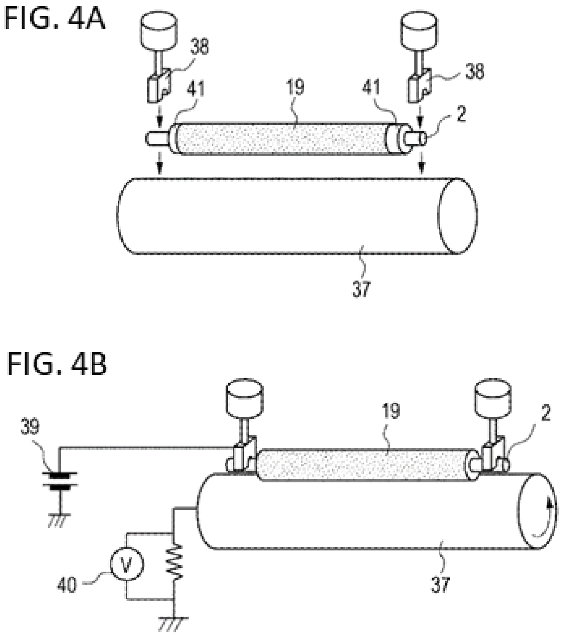

The toner supply roller was left to stand for 12 hours under an environment of a temperature of 15°C and a relative humidity of 10%, and an initial resistance value R1 was then measured. FIGS. 4A and 4B illustrate schematic configuration views of a jig for evaluating the resistance values of the toner supply roller that is used in the present measurement.

As illustrated in FIG. 4A, nonconductive nip regulating members 41 were mounted on both ends of the substrate 2. In addition, a cylindrical metal 37 having a diameter of 30 mm was rotated while both ends of the conductive substrate 2 were pressed at a load of 4.9 N, respectively, through conductive bearings 38, and the toner supply roller 19 was driven to rotate at a speed of 32 rpm.

Next, as illustrated in FIG. 4B, a voltage of 200 V was applied with a high-voltage power source 39, and a potential difference between both ends of a resistor having a known resistance value (the resistance value was lower by two orders of magnitude or more than the resistance value of the toner supply roller 19) disposed between the cylindrical metal 37 and the ground was measured. A voltmeter 40 (trade name: 189TRUERMSMULTIMETER, manufactured by Fluke Corporation) was used to measure the potential difference.

From the measured potential difference and the resistance value of the resistor, a current flowing into the cylindrical metal 37 through the toner supply roller 19 was obtained by calculation. In addition, the resistance value of the toner supply roller 19 was obtained by dividing the applied voltage of 200V by the resultant current. Here, in the measurement of the potential difference, sampling was performed for three seconds after two second since the application of the voltage, and a value calculated from the average value thereof was regarded as the initial resistance value R1 of the toner supply roller. The results are shown in Table 2.

### Performance Evaluation as Toner Supply Roller (Density Difference ΔD)

As the performance evaluation of the toner supply roller, an image density change before and after long-time operation under an environment of a temperature of 15°C and a relative humidity of 10% was evaluated using the toner supply roller from which the initial resistance value had been measured. In a case where the resistance value increased due to the long-term operation, the bias potential difference in the above-described electrical supply becomes poor, a desired amount of toner supplied cannot be secured, and the image density decreases.

The toner supply roller obtained in each of Example and Comparative Example was loaded as the toner supply roller 19 into a black toner process cartridge for a laser printer (trade name: LBP-7700C, manufactured by Canon Inc.) having a configuration illustrated in FIG. 3. In addition, the process cartridge was built in the laser printer, left to stand in an environment of a temperature of 15°C and a relative humidity of 10% for one day to be incorporated, and then made to output a single solid black evaluation image. Next, 8,000 sheets of black images each having a printing rate of 1% were continuously output as a printing test. After that, a single solid black evaluation image was output again. The evaluation images and the outputs of the printing test were all output in single color.

The densities at a total of five points including the center and four corners (positions each 20 mm inward from the end portions of the image) of each solid black image were measured with a spectrodensitometer (trade name: 500 spectrodensitometer, manufactured by X-Rite Co.), and the arithmetic average of the densities at the five points was obtained, thereby obtaining the density of the solid black evaluation image. A density difference ΔD represented by |D2 - D1| was calculated where the average density of the solid black evaluation image before the printing test was indicated by D1 and the average density of the solid black evaluation image after the printing test was indicated by D2. The results are shown in Table 2.

### Measurement of Resistance Value R2 of Toner Supply Roller after Continuous Operation

Subsequently to the performance evaluation (density difference ΔD), the resistance value R2 of the toner supply roller after continuous operation was measured under an environment of a temperature of 15°C and a relative humidity of 10%. After the performance evaluation, the toner supply roller was removed from the process cartridge. After that, the entire surface of the toner supply roller was blown by air.

The conditions of the air blowing were as follows. Air blow gun nozzle hole diameter: 3 mm, high-pressure air or nitrogen gas: 0.6 MPa, distance between the toner supply roller surface and the nozzle: 20 cm; with respect to gun movement speed, reciprocal movement speed in the longitudinal direction of the toner supply roller: 30 cm/s, toner supply roller rotation speed: 30 rpm, blowing time: 30 s. Next, the resistance value R2 was measured in the same manner as in the measurement of the initial resistance value R1. The time taken from the output of the solid black evaluation image after the printing test to the measurement of the resistance value R2 was set to 30 minutes. The results are shown in Table 2.

The resistance variation value (%) in Table 2 is a value calculated by [(R2 - R1)/R1] × 100 and is an index representing a resistance increase rate.

### Examples 2 to 13

The kinds of the materials (a) and (b) were changed as shown in Table 1.

In Example 12, a commercially available product B-1; 3-hydroxypyridine (manufactured by Tokyo Chemical Industry Co., Ltd.), which is not an ionic compound, was used as the material (B). In Example 13, TUBALL 01RW03 manufactured by OCSiAl was used as the material (A) CNT. Toner supply rollers T-2 to T-13 according to Examples 2 to 13 were fabricated in the same manner as in Example 1 except for what has been described above. Table 1 shows the materials (a) and (b) used and nitrogen-containing heteroaromatic ring structures.

The toner supply rollers of Examples 1 to 13 each have a conductive elastic layer containing polyurethane having a nitrogen-containing heteroaromatic ring structure. Therefore, as shown in Table 2, the resistance increases were small during the long-time operation under a low temperature and low humidity environment at a temperature of 15°C and a relative humidity of 10%, and the density difference evaluations were also favorable.

### Comparative Example 1

A toner supply roller T-E1 was fabricated in the same manner as in Example 1 except that a commercially available product B-E1; (2-hydroxyethyl)triphenylphosphonium chloride (manufactured by Fuji Film Wako Pure Chemical Industries, Ltd.) was used as the material (B). The ionic compound used herein has a hydroxyl group and includes a benzene ring structure formed of carbon alone without including nitrogen-containing heteroaromatic ring structure. Therefore, the ionic compound is imported into the urethane molecule, but the urethane molecule that has imported the ionic compound includes only an aromatic ring structure formed of carbon alone and includes no nitrogen-containing heteroaromatic ring structures. Therefore, the effect as shown in Examples did not appear, and as shown in Table 2, the resistance significantly increased during the long-time operation, and the density difference of the image was also large.

### Reference Examples 1 and 2

The present disclosure intends to solve a problem that arises from the use of highly conductive CNTs. Reference Examples 1 and 2 show that the problem is not caused even when carbon other than CNTs is used.

The kinds of the material (a) and the material (b) were changed as shown in Table 1.

In Reference Example 1, graphite (CSP-E manufactured by Nippon Graphite Industries, Co., Ltd.) was used as the material (a). Like CNTs, graphite has π-orbital electrons, and adsorption occurs due to a nitrogen-containing heteroaromatic ring structure and a π-π interaction.

In Reference Example 2, graphite (the same as the above) was used as the material (a), and the commercially available product B-E1; (2-hydroxyethyl)triphenylphosphonium chloride (manufactured by Fuji Film Wako Pure Chemical Industries, Ltd.), which was also used in Comparative Example 1, was used as the material (b). Toner supply rollers T-R1 and T-R2 were fabricated in the same manner as in Example 1 except for what has been described above.

The toner supply roller according to any of Reference Examples 1 and 2 has a conductive elastic layer containing graphite in place of CNTs. Since graphite is poorly conductive compared with CNTs, even in a case where graphite aggregates, an electrostatic force due to local charge transfer and the accompanying electric field concentration is not generated, and desorption of graphite also does not occur. Therefore, as shown in Table 2, an increase in resistance was small, but the original resistance value was high, and favorable images could not be obtained. Particularly, several hundred times larger conductivity is required to make the resistance value equal to that during the use of CNTs, and it is thus also impossible to control the resistance from the beginning. In Reference Example 1, adsorption is induced by the π-π interaction between graphite and the nitrogen-containing heterocyclic structure; however, in Reference Example 2 where adsorption does not occur, the conductivity is not as high as that of CNTs, and the problem itself that is generated in the case of using CNTs is not generated.

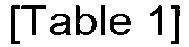

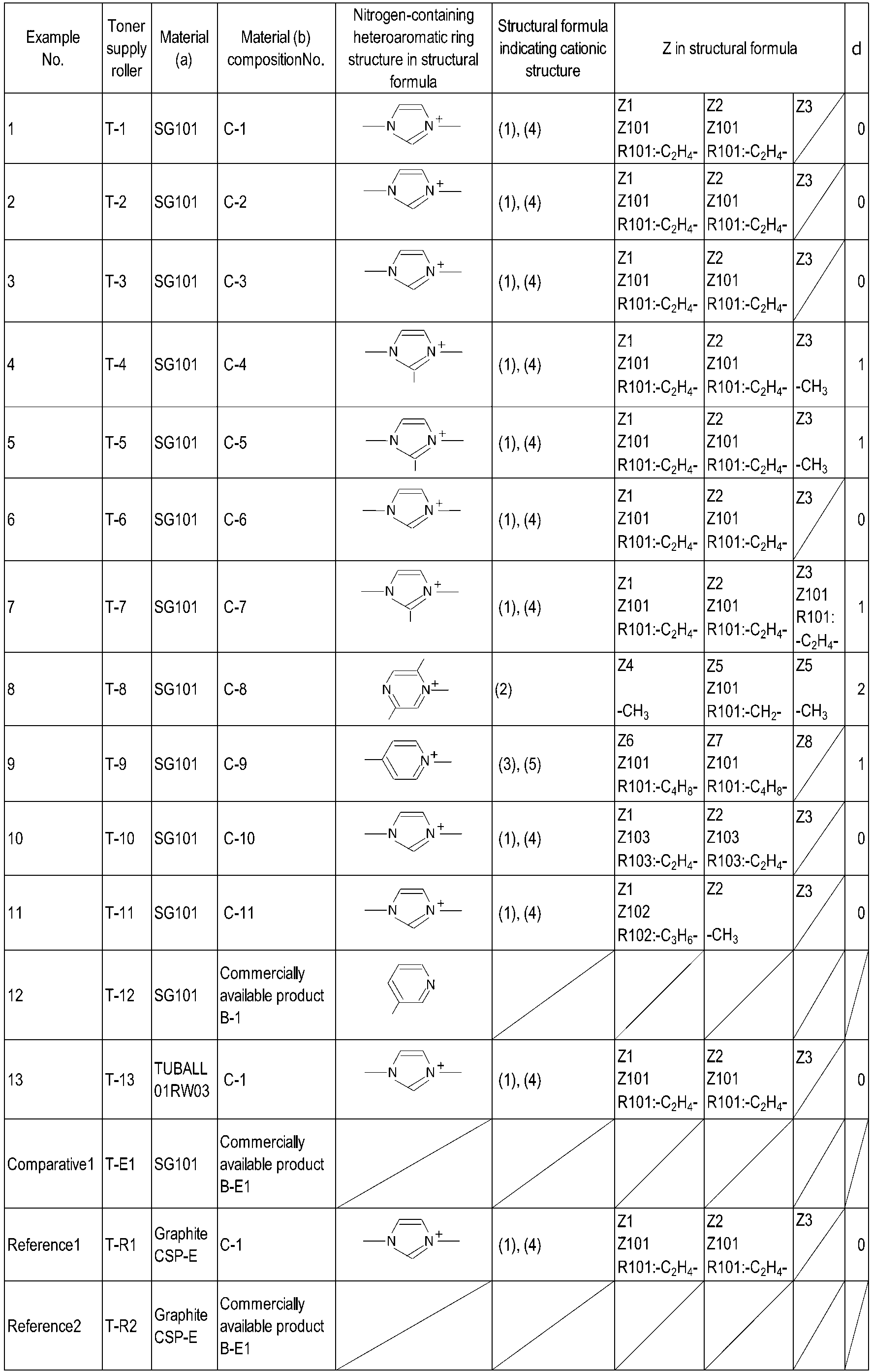

In Table 1, SG101 indicates ZEONANO SG101 manufactured by ZEON. d indicates values corresponding to d1 to d3 in the structural formulae (1) to (3).

**[Table 2]**

| Example No. | Toner supply roller No. | Cell diameter µm | Number of cells in unit region Cells/inch² | CNT long-side length µm | CNT short-side length nm | ResistivityR 1 Ω | ResistivityR2 Ω | Resistance variation value % | Density difference ΔD |
|---|---|---|---|---|---|---|---|---|---|
| 1 | T-1 | 265 | 88 | 162 | 5.0 | 6.00E+06 | 8.40E+06 | 140 | 0.01 |
| 2 | T-2 | 309 | 109 | 159 | 11.1 | 9.27E+06 | 2.46E+07 | 265 | 0.06 |
| 3 | T-3 | 237 | 117 | 161 | 8.1 | 8.18E+06 | 1.83E+07 | 224 | 0.04 |
| 4 | T-4 | 246 | 104 | 162 | 20.3 | 1.25E+07 | 4.90E+07 | 391 | 0.11 |
| 5 | T-5 | 250 | 85 | 158 | 23.4 | 1.36E+07 | 5.90E+07 | 433 | 0.12 |
| 6 | T-6 | 349 | 95 | 157 | 5.1 | 7.09E+06 | 1.29E+07 | 182 | 0.03 |
| 7 | T-7 | 264 | 84 | 160 | 17.2 | 1.15E+07 | 4.00E+07 | 349 | 0.09 |
| 8 | T-8 | 365 | 98 | 161 | 29.5 | 1.58E+07 | 8.17E+07 | 516 | 0.16 |
| 9 | T-9 | 276 | 78 | 160 | 32.5 | 1.69E+07 | 9.44E+07 | 558 | 0.17 |
| 10 | T-10 | 307 | 133 | 151 | 14.2 | 1.04E+07 | 3.18E+07 | 307 | 0.08 |
| 11 | T-11 | 305 | 140 | 154 | 26.4 | 1.47E+07 | 6.99E+07 | 475 | 0.14 |
| 12 | T-12 | 234 | 111 | 152 | 35.7 | 1.80E+07 | 1.08E+08 | 600 | 0.19 |
| 13 | T-13 | 256 | 125 | 10.9 | 8.9 | 1.70E+07 | 5.95E+07 | 350 | 0.10 |
| Comparative1 | T-E1 | 260 | 150 | 159 | 60.5 | 3.20E+07 | 3.68E+08 | 1150 | 0.30 |
| Reference1 | T-R1 | 263 | 90 | - | - | 1.37E+09 | 4.33E+09 | 316 | - |
| Reference2 | T-R2 | 258 | 148 | - | - | 1.25E+09 | 3.85E+09 | 308 | - |

In Table 2, the cell diameters are average cell diameters. The long-side lengths and the short-side lengths indicate number-average values. For example, the expression 6.00E + 06 indicates 6.00 × 10⁶.

Various embodiments have been described in detail above but it will be understood that the present disclosure is not limited to these embodiments and encompasses all modifications, variants, alternatives and equivalents falling within the scope of the appended claims.

## Claims

1. A conductive elastic roller (1) comprising:
a conductive substrate (2); and
a conductive elastic layer (3) on the substrate, wherein
the conductive elastic layer (3) comprises polyurethane and carbon nanotubes, and
the polyurethane comprises a nitrogen-containing heteroaromatic ring structure.

2. The conductive elastic roller according to claim 1, wherein the nitrogen-containing heteroaromatic ring structure has a cationic structure formed of a nitrogen-containing heteroaromatic ring.

3. The conductive elastic roller according to claim 1 or 2, wherein the nitrogen-containing heteroaromatic ring structure is at least one cationic nitrogen-containing heteroaromatic ring structure selected from the group consisting of an imidazolium cation, a pyridinium cation, a pyrazinium cation, a pyrimidinium cation, an azepinium cation, a quinolinium cation, an isoquinolinium cation, an indolinium cation, a quinoxalinium cation, a triazolium cation, a triazinium cation, and a thiazolinium cation.

4. The conductive elastic roller according to any one of claims 1 to 3, wherein
the nitrogen-containing heteroaromatic ring structure has a cationic structure formed of a nitrogen-containing heteroaromatic ring, and
the cationic structure formed of the nitrogen-containing heteroaromatic ring has at least one cationic structure selected from the group consisting of a structure represented by structural formula (1) below, a structure represented by structural formula (2) below, and a structure represented by structural formula (3) below: 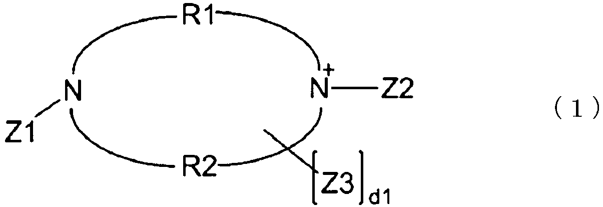
[in the structural formula (1), R1 and R2 represent a hydrocarbon group necessary to form a nitrogen-containing heteroaromatic five-membered ring together with the nitrogen atom to which each thereof bonds, d1 represents an integer of 0 or 1, Z1 to Z3 each independently represent a structure indicated by the structural formula (Z101) below, a structure indicated by the structural formula (Z102) below, a structure indicated by the structural formula (Z103) below, a hydrogen atom, or a hydrocarbon group having 1 to 4 carbon atoms, and here, at least one of Z1 to Z3 is the structure indicated by the structural formula (Z101) below, the structure indicated by the structural formula (Z102) below, or the structure indicated by the structural formula (Z103) below], 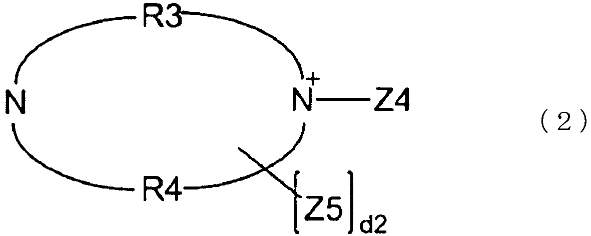
[in the structural formula (2), R3 and R4 represent a hydrocarbon group necessary to form a nitrogen-containing heteroaromatic six-membered ring together with a nitrogen atom to which each thereof bonds, d2 represents an integer of 0 to 2, when d2 is 2, Z5 may be optionally the same as or different from each other, Z4 and Z5 each independently represent a structure indicated by the structural formula (Z101) below, a structure indicated by the structural formula (Z102) below, a structure indicated by the structural formula (Z103) below, a hydrogen atom, or a hydrocarbon group having 1 to 4 carbon atoms, and here, at least one of Z4 and Z5 is the structure indicated by the structural formula (Z101) below, the structure indicated by the structural formula (Z102) below, or the structure indicated by the structural formula (Z103) below], 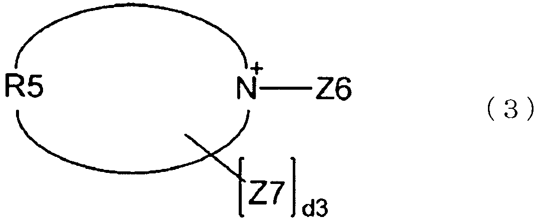
[in the structural formula (3), R5 represents a hydrocarbon group necessary to form a nitrogen-containing heteroaromatic ring together with a nitrogen atom to which R5 bonds, d3 represents an integer of 0 or 1, Z6 and Z7 each independently represent a structure indicated by the structural formula (Z101) below, a structure indicated by the structural formula (Z102) below, a structure indicated by the structural formula (Z103) below, a hydrogen atom, or a hydrocarbon group having 1 to 4 carbon atoms, and here, at least one of Z6 and Z7 is the structure indicated by the structural formula (Z101) below, the structure indicated by the structural formula (Z102) below, or the structure indicated by the structural formula (Z103) below], and 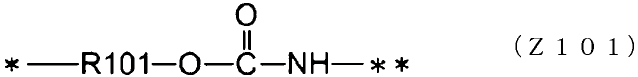 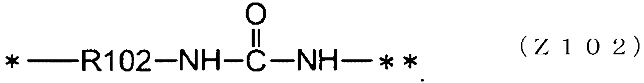 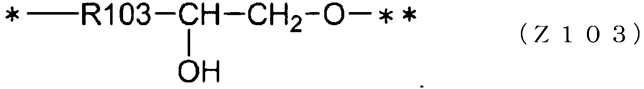
[in the structural formulae (Z101), (Z102), and (Z103), R101, R102, and R103 each independently represent a divalent linear or branched hydrocarbon group, a symbol "*" represents a bonding portion with the nitrogen atom or a carbon atom configuring the nitrogen-containing heteroaromatic five-membered ring of the structural formula (1), a bonding portion with the nitrogen atom or a carbon atom configuring the nitrogen-containing heteroaromatic six-membered ring of the structural formula (2), or a bonding portion with the nitrogen atom or a carbon atom configuring the nitrogen-containing heteroaromatic ring of the structural formula (3), and a symbol "**" represents a bonding portion with a carbon atom in a polymer chain of the polyurethane].

5. The conductive elastic roller according to claim 4, wherein the cationic structure is a structure indicated by the following structural formula (4): 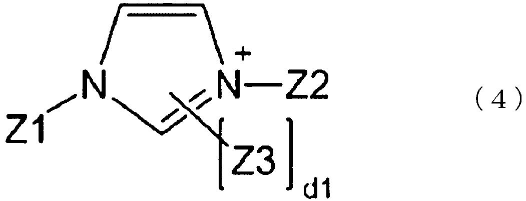 [in the structural formula (4), d1 represents an integer of 0 or 1, Z1 to Z3 each independently represent the structure indicated by the structural formula (Z101), the structure indicated by the structural formula (Z102), the structure indicated by the structural formula (Z103), a hydrogen atom, or a hydrocarbon group having 1 to 4 carbon atoms, and here, at least one of Z1 to Z3 is the structure indicated by the structural formula (Z101), the structure indicated by the structural formula (Z102), or the structure indicated by the structural formula (Z103)].

6. The conductive elastic roller according to any one of claims 1 to 5, wherein
the polyurethane comprises an anion, and
the anion comprises at least one anion selected from the group consisting of a fluoroalkylsulfonylimide anion, a fluorosulfonylimide anion, a fluoroalkylsulfonate anion, a fluorosulfonate anion, a fluoroalkylcarboxylic acid anion, a fluoroalkylmethide anion, a fluoroboric acid anion, a fluorophosphoric acid anion, a dicyanamide anion, and a thiocyanate anion.

7. The conductive elastic roller according to claim 6, wherein the anion comprises at least one anion selected from the group consisting of a bis(fluorosulfonyl)imide anion, and a bis(trifluoromethanesulfonyl)imide anion.

8. The conductive elastic roller according to any one of claims 1 to 7, wherein the conductive elastic layer is a foamed elastic layer having voids on a surface thereof, for which an average cell diameter is 100 to 500 µm, and the number of cells is 50 to 300 cells per square inch.

9. The conductive elastic roller according to any one of claims 1 to 8, wherein
a number-average value of lengths in a short-side direction of the carbon nanotubes is 2.0 to 50.0 nm, and
a number-average value of lengths in a long-side direction of the carbon nanotubes is 10 to 2000 µm.

10. A process cartridge configured to be attachable to and detachable from a main body of an electrophotographic image forming apparatus, wherein
the process cartridge comprises the conductive elastic roller according to any one of claims 1 to 9.

11. An electrophotographic image forming apparatus, comprising:
the conductive elastic roller according to any one of claims 1 to 9.
